# EUROPEAN PATENT APPLICATION

(11) **EP 3 855 224 A1**
(43) Date of publication of application: **28.07.2021**
(21) Application number: 19863521.1
(22) Date of filing: 20.09.2019
(51) Int. Cl.: G02B 6/36

(54) **OPTICAL CONNECTOR CLEANING TOOL**

(30) Priority: 21.09.2018 JP 2018177413
(71) Applicant: Tomoegawa Co., Ltd., Tokyo 104-8335 (JP)
(72) Inventor: GOTO, Makoto, Shizuoka-shi, Shizuoka 424-0831 (JP); SUZUKI, Masayoshi, Shizuoka-shi, Shizuoka 424-0831 (JP)
(74) Representative: Hoffmann Eitle
(86) International application number: PCT/JP2019/036962
(87) International publication number: WO 2020/059853

(57) **Abstract**

Provided is an optical connector cleaning tool that is unlikely to cause a static charge and can accurately remove dust located on an end surface of an optical connector. Disclosed is an optical connector cleaning tool including: a main body housing a supply holder configured to hold a cleaner that has a contaminant-retainable layer and can be supplied so as to clean an end surface of an optical connector; a cleaning head configured to position the cleaner having been supplied from the main body and be held at a certain holding position with respect to the main body; a controller that can be engaged with the optical connector and can be displaced from a first position to a second position, which is different from the first position, with respect to the cleaning head while kept engaged with the optical connector; and a supply mechanism configured to transmit, to the cleaner, movement of displacing the controller from the first position to the second position to displace and then supply the cleaner to the cleaning head, in which when the controller is positioned at the first position, the cleaning head is apart from the end surface of the optical connector, while the controller is displaced from the first position to the second position, the supply mechanism causes the cleaner to be displaced, and when the controller is positioned at the second position, the cleaning head comes into contact with the end surface of the optical connector.

## Description

### Technical Field

The present invention relates to an optical connector cleaning tool to clean an end surface of a ferrule for the optical connector.

### Background Art

As an optical connector cleaning tool to clean the optical connector, cleaning tools, in which a non-woven fabric is moved while the non-woven fabric is in contact with an end surface of a ferrule for an optical connector, have been known (see, for instance, Patent Literatures 1 and 2).

### Citation List

### Patent Literature

Patent Literature 1: JP 2014-35489 A
Patent Literature 2: Patent No. 5955453 B

### Summary of Invention

### Technical Problem

When optical fibers are connected to an optical connector, an end surface of the optical fibers should face an end surface of a ferrule for the optical connector. Thus, when dust adheres to the end surface of the ferrule for the optical connector or the end surface of the optical fiber, the transmission loss increases. For this reason, it is necessary to clean the end surface of the ferrule for the optical connector by using an optical connector cleaning tool.

The above-mentioned optical connector cleaning tool removes, using a cloth, dust located on the end surface of the ferrule for the optical connector. In this optical connector cleaning tool, since the end surface of the ferrule is wiped with a cloth, a member(s) such as the ferrule for the optical connector may be statically charged. For this reason, there is a possibility that dust may be attracted to the end surface of the ferrule for the optical connector due to the static charge, or an electrical defect may occur. Further, when the ferrule end surface is wiped with a cloth, dust is scraped off the end surface of the ferrule for the optical connector. This may cause damage on the ferrule end surface.

The present invention has been made in view of the above points. The purpose of the invention is to provide an optical connector cleaning tool that is less likely to cause a static charge and can accurately remove dust.

### Solution to Problem

An optical connector cleaning tool according to the invention includes:
a main body housing a supply holder configured to hold a cleaner that has a contaminant-retainable layer and can be supplied so as to clean an end surface of an optical connector;
a cleaning head configured to position the cleaner having been supplied from the main body and be held at a certain holding position with respect to the main body;
a controller that can be engaged with the optical connector and can be displaced from a first position to a second position, which is different from the first position, with respect to the cleaning head while kept engaged with the optical connector; and
a supply mechanism configured to transmit, to the cleaner, movement of displacing the controller from the first position to the second position to displace and then supply the cleaner to the cleaning head,
in which when the controller is positioned at the first position, the cleaning head is apart from the end surface of the optical connector,
while the controller is displaced from the first position to the second position, the supply mechanism causes the cleaner to be displaced, and
when the controller is positioned at the second position, the cleaning head comes into contact with the end surface of the optical connector.

### Advantageous Effects of Invention

A static charge is unlikely to occur and dust located on an end surface of an optical connector can be accurately removed.

### Brief Description of Drawings

Fig. 1 is a perspective view showing the overall outline of a cleaning tool 10 according to an embodiment of the invention.
Fig. 2 is a perspective view showing the overall outline of the cleaning tool 10 in this embodiment and an optical connector OC.
Fig. 3 is a side view showing the left side surface of the cleaning tool 10 in this embodiment.
Fig. 4 is a side view showing the right side surface of the cleaning tool 10 in this embodiment.
Fig. 5 is a perspective view showing a state in which a right housing 110R of the cleaning tool 10 in this embodiment is removed.
Fig. 6 is a perspective view showing a state in which a left housing 110L of the cleaning tool 10 in this embodiment is removed.
Fig. 7 is a perspective view showing a state in which a supply reel 200 and a take-up reel 300 of the cleaning tool 10 in this embodiment are removed.
Fig. 8 is a perspective view showing the configuration of the right housing 110R of the cleaning tool 10 in this embodiment.
Fig. 9 is a perspective view showing the configuration of the left housing 110L of the cleaning tool 10 in this embodiment.
Fig. 10 is a perspective view showing the configuration of a head section 400 (a head section 400 and a head holder 420) of the cleaning tool 10 in this embodiment.
Fig. 11 is a perspective view showing a path of a cleaner CT in the head section 400 of the cleaning tool 10 in this embodiment.
Fig. 12 is a cross-sectional view showing a path of the cleaner CT in the head section 400 of the cleaning tool 10 in this embodiment.
Figs. 13A and 13B are cross-sectional views showing a change in movement of a take-up controller 500 of the cleaning tool 10 in this embodiment.
Fig. 14 is a cross-sectional view showing a change in movement of the take-up controller 500 of the cleaning tool 10 according to this embodiment.
Fig. 15 is a schematic view showing a ratchet gear 322, a rack 536, and a supply reel pawl 180 of the cleaning tool 10 in this embodiment.
Figs. 16A to 16D are cross-sectional views showing a process of cleaning an end surface ES of a ferrule FE for an optical connector by using the cleaning tool 10 of this embodiment.
Figs. 17A to 17D are cross-sectional views showing a process of cleaning an end surface ES of a ferrule FE for an optical connector by using the cleaning tool 10 of this embodiment.
Fig. 18 is a perspective view showing a state in which a supply reel 200 and a take-up reel 3000 of the cleaning tool 10 in this embodiment are removed.

### Description of Embodiments

### <<<< Overview of Embodiments in the Invention >>>>

### << First Embodiment >>

The first embodiment provides an optical connector cleaning tool (e.g., a cleaning tool 10 described later), including:
a main body (e.g., a housing 100 described later) housing a supply holder (e.g., a supply reel 200 described later) configured to hold a cleaner (e.g., a cleaner CT described later) that has a contaminant-retainable layer (e.g., a resin layer RL described later) and can be supplied so as to clean an end surface (e.g., an end surface ES of a ferrule FE for an optical connector as described later) of an optical connector;
a cleaning head (e.g., a cleaning head 410 described later) configured to position the cleaner having been supplied from the main body and be held at a certain holding position with respect to the main body;
a controller (e.g., a take-up controller 500 described later) that can be engaged with the optical connector and can be displaced from a first position to a second position, which is different from the first position, with respect to the cleaning head while kept engaged with the optical connector; and
a supply mechanism (e.g., a rack 536 and a ratchet gear 322 described later) configured to transmit, to the cleaner, movement of displacing the controller from the first position to the second position to displace and then supply the cleaner to the cleaning head,
in which when the controller is positioned at the first position, the cleaning head is apart from the end surface of the optical connector,
while the controller is displaced from the first position to the second position, the supply mechanism causes the cleaner to be displaced, and
when the controller is positioned at the second position, the cleaning head comes into contact with the end surface of the optical connector.

The optical connector cleaning tool is provided with the main body, the cleaning head, and the supply mechanism.

The main body houses the supply holder for the cleaner. The cleaner is a member for cleaning an end surface of an optical connector. The cleaner has a contaminant-retainable layer (hereinafter, referred to as a retainable layer). By pressing the retainable layer on the end surface of the optical connector, a contaminant(s) (e.g., dust) present on the end surface of the optical connector can be transferred to the retainable layer, and the contaminant(s) can then be removed from the end surface of the optical connector. The cleaner is held in the supply holder such that the cleaner can be supplied (delivered).

The cleaner preferably has a long shape. In addition, the cleaner is preferably flexible. For instance, the shape may be like a tape or a thread. The cleaner may be one that can be housed in and supplied from the supply holder. The size and shape of the cleaner can be selected, if appropriate, as long as the cleaner can be supplied from the main body to the cleaning head to clean the end surface of the optical connector.

The cleaning head is separated from the main body and held in a certain holding position with respect to the main body. The cleaning head is held in a fixed position with respect to the main body. The cleaner, which is supplied from the main body, is positioned in the cleaning head. This causes almost no change in the relative position or distance between the cleaning head and the main body, during cleaning work. Accordingly, while the optical connector cleaning tool (e.g., the main body, the cleaning head) is kept at a certain attitude, the cleaner can be pressed on the end surface of the optical connector. This makes it possible to accurately transfer a contaminant from the end surface of the optical connector to the retainable layer.

The controller can be engaged with the optical connector. For instance, a worker may bring the optical connector cleaning tool closer to the optical connector to engage the controller with the optical connector. The controller can be displaced from the first position to the second position with respect to the cleaning head. The first position and the second position are apart from each other. The controller may be displaced relative to the cleaning head and is not necessarily displaced relative to the optical connector.

The supply mechanism transmits, to the cleaner, movement of displacing the controller from the first position to the second position. The cleaner is displaced by the movement transmitted and then supplied to the cleaning head.

When the controller is positioned at the first position, the cleaning head is apart from the end surface of the optical connector. That is, when the controller is located at the first position, the cleaner is not yet in a state of cleaning the optical connector.

While the controller is displaced from the first position to the second position, the cleaner is displaced by the supply mechanism. The cleaner is displaced while the controller is moved from the first position to the second position, so that a clean cleaner can be supplied to the cleaning head.

When the controller is located at the second position, the cleaning head comes into contact with the end surface of the optical connector, so that a clean cleaner can be brought into contact with the end surface of the optical connector to clean the end surface of the optical connector.

That is, when the controller is located at the first position, the cleaning head of the optical connector cleaning tool according to the first embodiment is apart from the end surface of the optical connector; while the controller is displaced from the first position to the second position, the cleaner is displaced; and when the controller is located at the second position, the cleaning head comes into contact with the end surface of the optical connector.

When the controller is displaced, movement of the controller is transmitted to the cleaner via the supply mechanism, and the cleaner is thus supplied from the main body to the cleaning head.

Further, when the controller is located at the first position, the cleaning head may be apart from the end surface of the optical connector; when the controller is located at the second position, the cleaning head may come into contact with the end surface of the optical connector; and while the controller is displaced from the first position to the second position, the cleaning head may gradually become closer to the end surface of the connector.

### << Second Embodiment >>

The second embodiment is configured by further including, in the first embodiment,
a head holder (e.g., a head holder 420 described later) provided at a fixed position with respect to the main body and having a certain shape,
in which the cleaning head is provided at a fixed position of the head holder and is held at the holding position with respect to the main body.

The head holder has a certain shape. That is, the shape of the head holder does not change due to the displacement of the controller, the supply mechanism, or the like, and the shape does not change with time. Further, the head holder preferably has a constant size.

Further, the head holder is provided at substantially a constant position with respect to the main body. That is, the position of the head holder does not change due to the displacement of the controller, the supply mechanism, or the like, and the position does not change with time.

The cleaning head is provided at a fixed position of the head holder. This enables the cleaning head to be held at a certain holding position with respect to the main body. Thus, the cleaning head is kept held at a certain holding position with respect to the main body regardless of whether the controller is displaced or the supply mechanism is in action. The cleaning head is arranged so as to project and be exposed from the head holder.

Note that the head holder may be separated from or may be integrated with the main body. If the head holder is separated, assembly and maintenance can be facilitated. If the head holder is integrated, its assembly process can be omitted.

### << Third Embodiment >>

The third embodiment is characterized in that in the second embodiment.
the head holder guides the cleaner, which is supplied from the main body, along a straight line toward the cleaning head.

The head holder also functions as a guide member for guiding the cleaner from the main body to the cleaning head. Since the cleaner has a contaminant-retainable layer, it is necessary to prevent the cleaner from being contaminated in the process of being guided to the cleaning head. Accordingly, the head holder guides the cleaner along a straight line (on a plane) without being distorted or bent until guided to the cleaning head. This makes it possible to supply the cleaner to the cleaning head in the shortest distance without contact with the head holder or other members, thereby capable of preventing contamination in the cleaner.

### << Fourth Embodiment >>

The fourth embodiment further includes, in the third embodiment,
a recovery holder (e.g., a take-up reel 300 described later) for recovering and holding the cleaner having been supplied to the cleaning head,
in which the supply mechanism transmits the movement of the controller to the recovery holder to recover the cleaner in the recovery holder, pulls a cleaner during the recovery of the former cleaner, and thus supply the cleaner from the main body to the cleaning head.

The recovery holder recovers and holds the cleaner having been supplied to the cleaning head. Further, the supply mechanism transmits the movement of the controller to the recovery holder to recover the cleaner by the recovery holder, and pulls the cleaner along with the recovery movement of the cleaner. That is, first, the supply mechanism transmits the movement of the controller to the recovery holder, and the recovery holder then recovers the cleaner. The cleaner is pulled upon the cleaner recovery movement, and the pulling movement is transmitted to the supply holder via the cleaner, and a cleaner held by the supply holder is supplied toward the cleaning head. Note that it is preferable that the cleaner is integrated continuously from the supply holder via the cleaning head to the recovery holder. The cleaner is supplied from the supply holder to the cleaning head, and after a contaminant is transferred while the end surface of the optical connector is cleaned, the cleaner is recovered from the cleaning head and then held by the recovery holder. Because a cleaner having a clean and retainable layer is supplied to the cleaning head, a contaminant is transferred by cleaning the end surface of the optical connector, and the contaminated cleaner is then recovered by the recovery holder, the above allows the clean cleaner to be always positioned at the cleaning head.

### << Fifth Embodiment >>

The fifth embodiment further includes, in the first embodiment,
an urging force generating means (e.g., a coil spring 140 described later) for applying, to the controller, an urging force for returning the controller to the first position (e.g., the maximum front position MF described later),
the urging force generating means being arranged at a position away from a transfer path of the cleaner.

The urging force generating means returns the controller to a home position by applying the urging force to the controller. The urging force generating means is arranged at a position away from a transfer path of the cleaner. The transfer path of the cleaner is a route from the supply holder via the cleaning head to the recovery holder.

The urging force generating means may be arranged at a position away from the transfer path of the cleaner. This can prevent a contaminant, which occurs due to the action of the urging force generating means, from being attached to, for instance, the retainable layer of the cleaner, so that the cleaner can be supplied to the cleaning head while the retainable layer, for instance, can be kept clean.

Further, it is preferable that the urging force generating means is arranged at a position apart from the head holder. This can make a contaminant, which occurs due to the action of the urging force generating means, unlikely to reach the head holder, thereby capable of preventing the contaminant attachment to, for instance, the retainable layer of the cleaner.

### << Sixth Embodiment >>

The cleaner is preferably long and flexible, and may be in the form of a film, a non-woven fabric, a woven fabric, or the like. The cleaner may be one that can transfer and remove a contaminant(s). Further, it is preferable that the cleaner is integrated continuously along the longitudinal direction. Furthermore, it is preferable that the cleaner has a peelable coating film that covers the retainable layer.

### << Seventh Embodiment >>

The supply holder may be housed in such a manner that the cleaner can be sent. The supply holder stores the cleaner in a storage space and sends the cleaner from the storage space. Further, the supply holder is preferably a rotating body that can rotate around a first rotation shaft (e.g., a rear protrusion 118 described later). The cleaner is wound around and held by the supply holder, and is unwound and gradually sent out from the supply holder as the supply holder rotates. When wound and held by the supply holder, the contaminant-retainable layer is covered by an overlapping adjacent cleaner. When the cleaner is unwound, the overlapping adjacent cleaner is separated and the contaminant-retainable layer is then exposed.

### << Eighth Embodiment >>

The recovery holder may be acceptable if it can recover and hold the cleaner. In the recovery holder, the cleaner is stored in a storage space for storage. Further, the recovery holder is preferably a rotating body that can rotate around a second rotation shaft (e.g., a front protrusion 116 described later) different from the first rotation shaft. The second rotation shaft is preferably located away from the first rotation shaft. Further, the second rotation shaft is preferably in parallel to the first rotation shaft. The first rotation shaft and the second rotation shaft may be coaxial. If the first rotation shaft and the second rotation shaft are coaxial, the supply holder and the recovery holder are arranged side by side in parallel to each other. Note that even if the first rotation shaft and the second rotation shaft are not arranged in parallel, the supply holder may be allowed if the supply holder can send out the cleaner, and the recovery holder may be allowed if the recovery holder can house the cleaner. The cleaner is gradually wound and recovered as the supply holder rotates.

### << Ninth Embodiment >>

The head holder has an elongated shape, and the head holder is arranged so as to protrude from the main body, and the protrusion position most distant from the main body is the holding position where the cleaning head is held. The cleaning head can be brought closer to the optical connector through a gap between various cables such as optical cables deployed.

### << Tenth Embodiment >>

The head holder has a hollow shape;
the cleaner is movably placed inside the head holder; and
the controller can be displaced along the longitudinal direction of the head holder and outside the head holder. Since the cleaner is placed inside the head holder and the controller is displaced outside the head holder, the operation of the controller should not cause contamination in the cleaner. As a result, the retainable layer can be kept clean. The controller preferably has an elongated shape.

### << Eleventh Embodiment >>

The head holder has both a supply path on which the cleaner sent out from the supply holder moves toward the cleaning head and a recovery path on which the cleaner moves from the cleaning head toward the recovery holder. Inside the head holder, the supply path and the recovery path are located in parallel to each other. Note that in this embodiment, the supply path and the recovery path may be in parallel in the head holder. This means that the rate of a change in the width of a gap between the supply path and the recovery path to a change in the transfer distance of the supply path or the transfer distance of the recovery path in the head holder is within one-tenth (1/10).

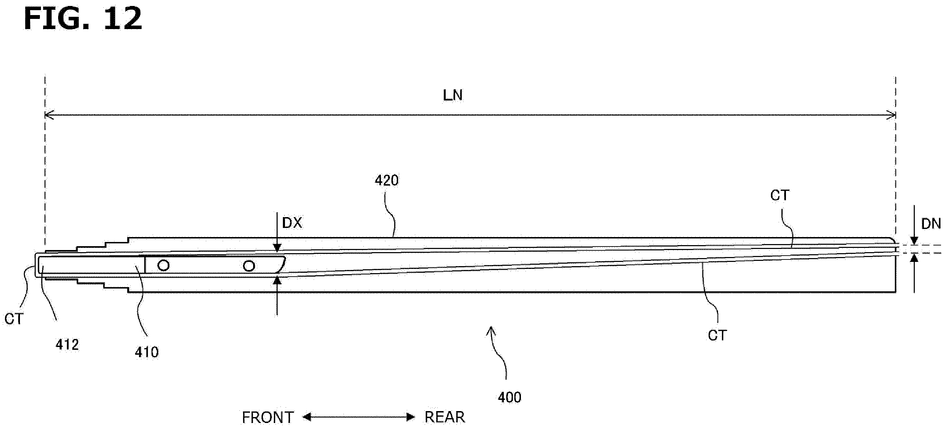

That is, if (the maximum distance between the supply path and the recovery path in the head holder - the minimum distance between the supply path and the recovery path in the head holder) / (the transfer distance of the supply path) ≤ 1/10, or if (the maximum distance between the supply path and the recovery path in the head holder - the minimum distance between the supply path and the recovery path in the head holder) / (the transfer distance of the recovery path) ≤ 1/10,the supply path and the recovery path are in parallel. The maximum distance between the supply path and the recovery path in the head holder is DX denoted in, for instance, Fig. 12 described later, and the minimum distance between the supply path and the recovery path in the head holder is DN denoted in, for instance, Fig. 12 described later. The transfer distance of the supply path or the transfer distance of the recovery path is LN denoted in, for instance, Fig. 12 described later.

In this way, by making the supply path and the recovery path of the cleaner parallel to each other in the head holding body, the head holder can be made thinner. Even in an environment where a large number of cables such as optical cables are deployed, the cleaning head can be brought closer to the optical connector by utilizing a gap between the cables.

### << Twelfth Embodiment >>

As described above, the urging force generating means is arranged at a position away from the transfer path of the cleaner. More specifically, the urging force generating means is arranged at a position different from that of the head holder. In more detail, the urging force generating means is arranged at a position away from the supply path and the recovery path in the head holder.

The urging force generating means is arranged at a position away from the cleaning head with the head holder interposed therebetween. In other words, the urging force generating means and the cleaning head are positioned apart with the head holder interposed therebetween. Even in a case where a contaminant occurs due to the action of the urging force generating means, the contaminant can be unlikely to reach the cleaning head. This can keep clean the cleaner having been supplied to the cleaning head.

Further, the urging force generating means is arranged at a position parallel to a line connecting the first rotation shaft of the supply holder and the second rotation shaft of the recovery holder and adjacent to the supply holder and the recovery holder.

The longitudinal direction of the head holder and the controller is parallel to a line connecting the first rotation shaft of the supply holder and the second rotation shaft of the recovery holder. The head holder and the controller are arranged coaxially.

Furthermore, the displacement direction of the urging force generating means is the same as the displacement direction of the controller. The urging force generated by the urging force generating means can thus be accurately transmitted to the controller.

### <<<< Details of Embodiment in the Invention >>>>

Hereinafter, an embodiment will be described with reference to the drawings.

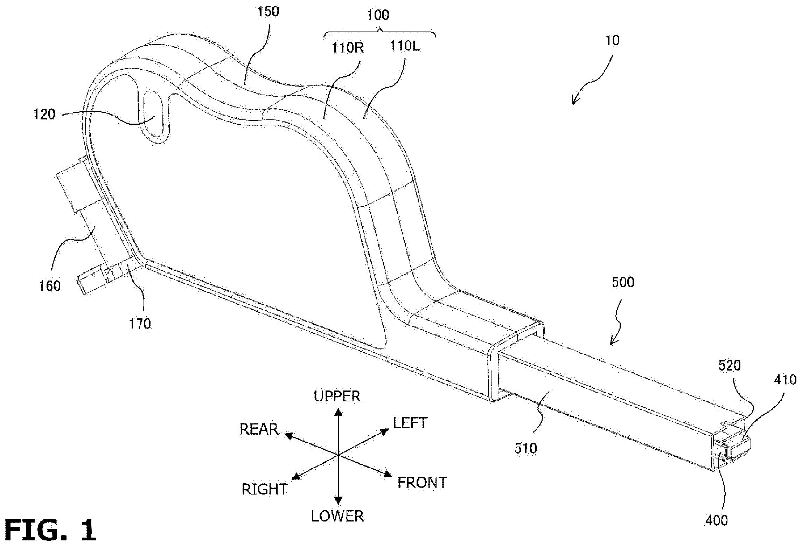

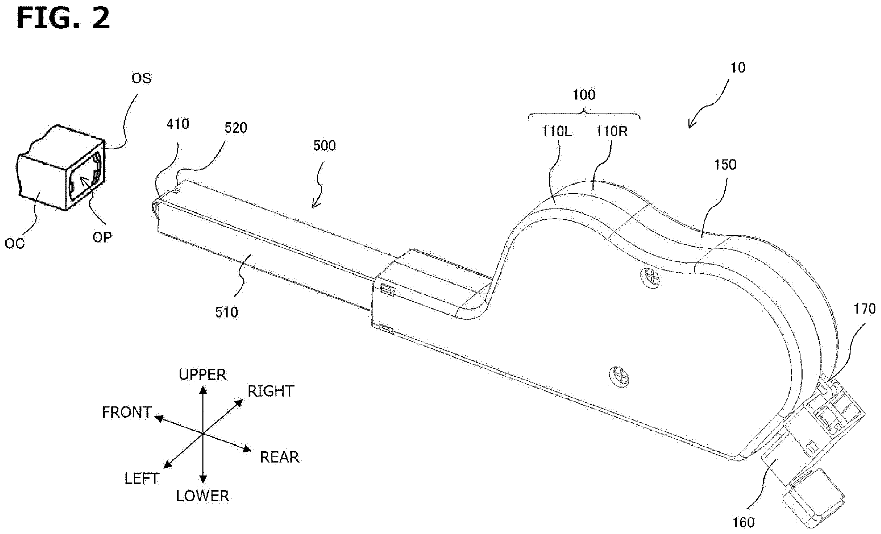

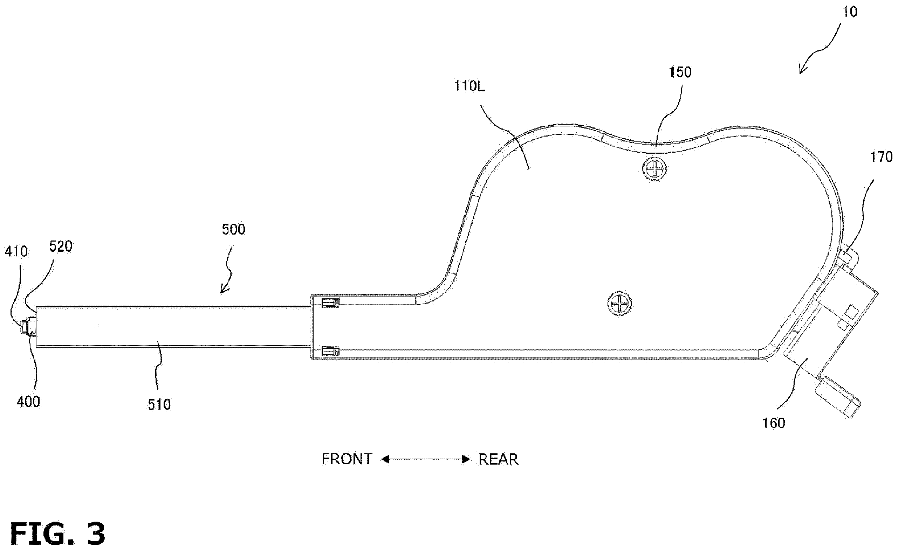

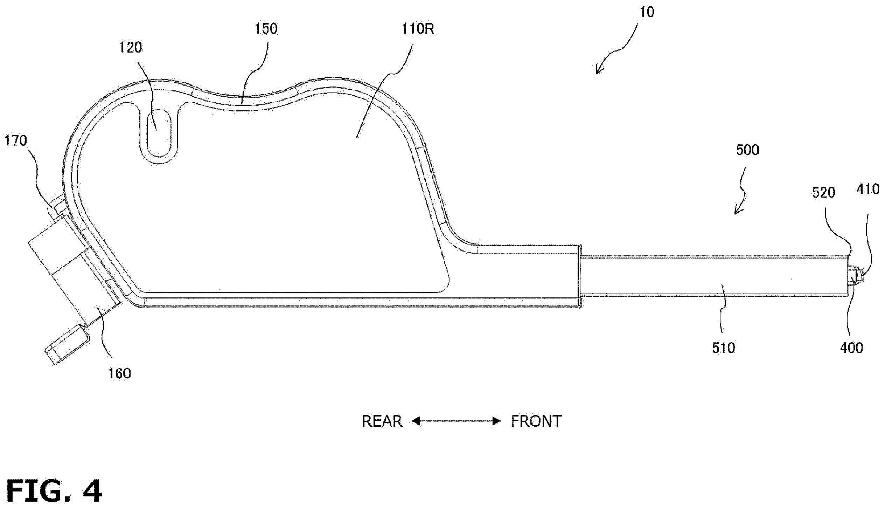

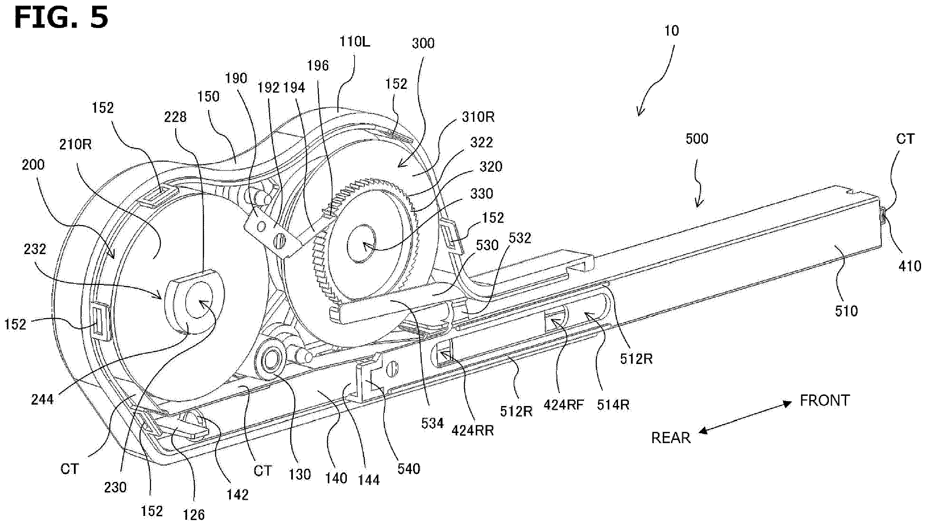

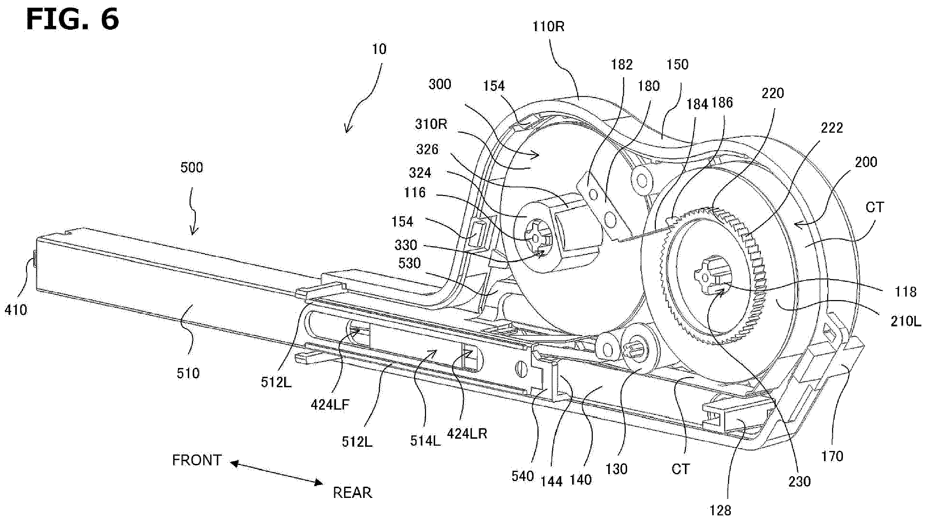

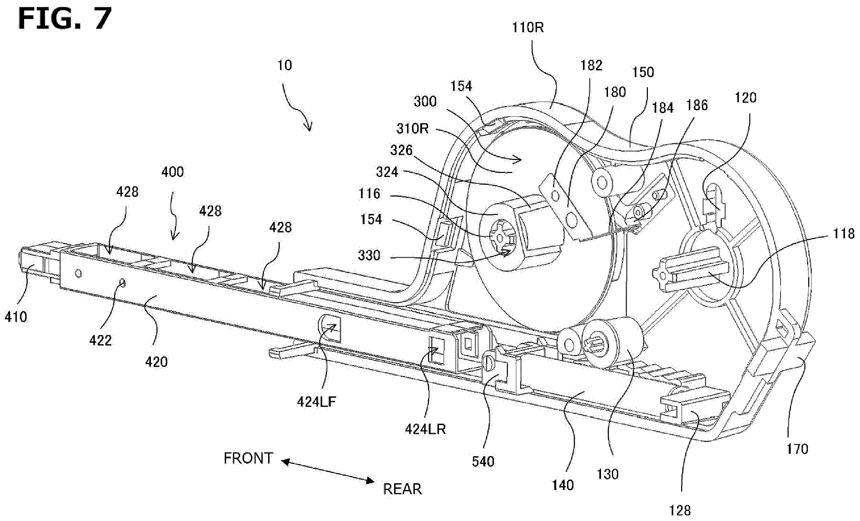

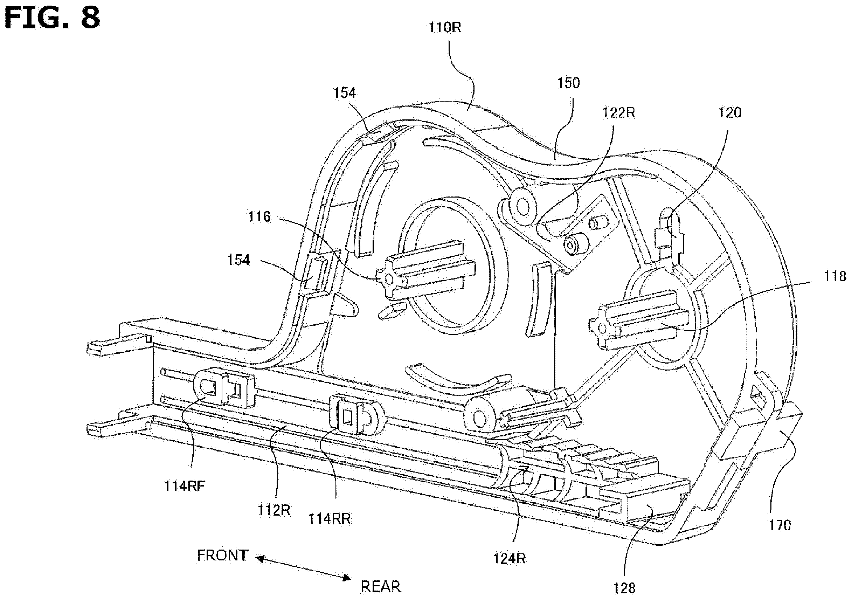

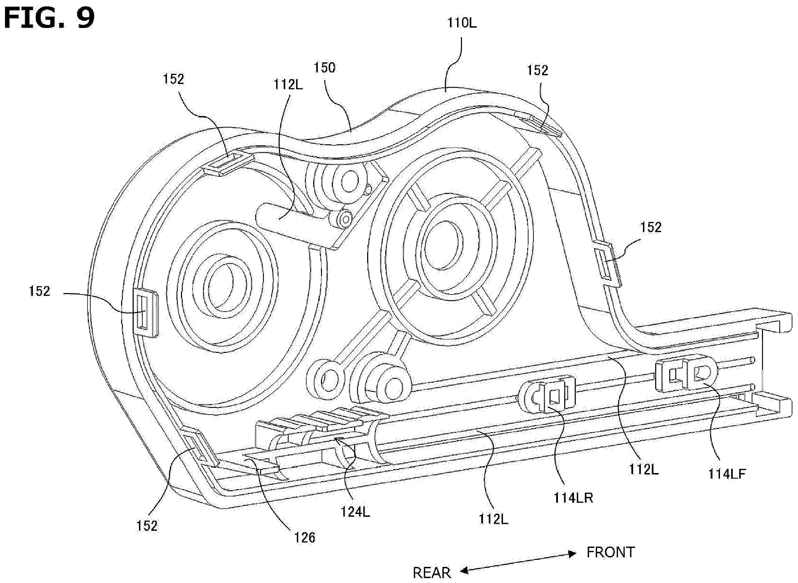

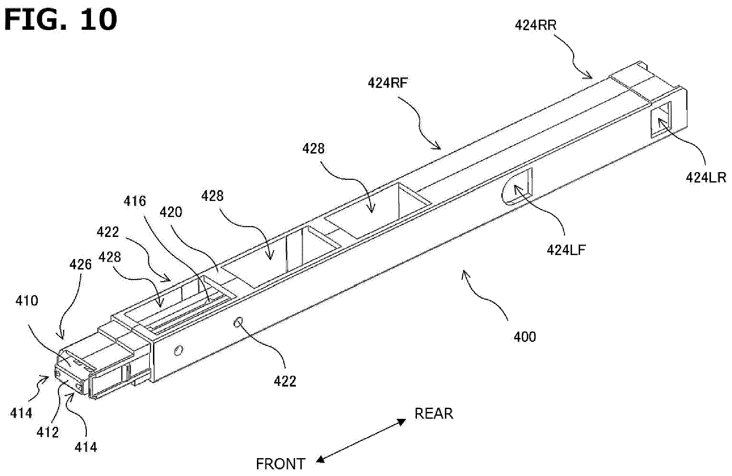

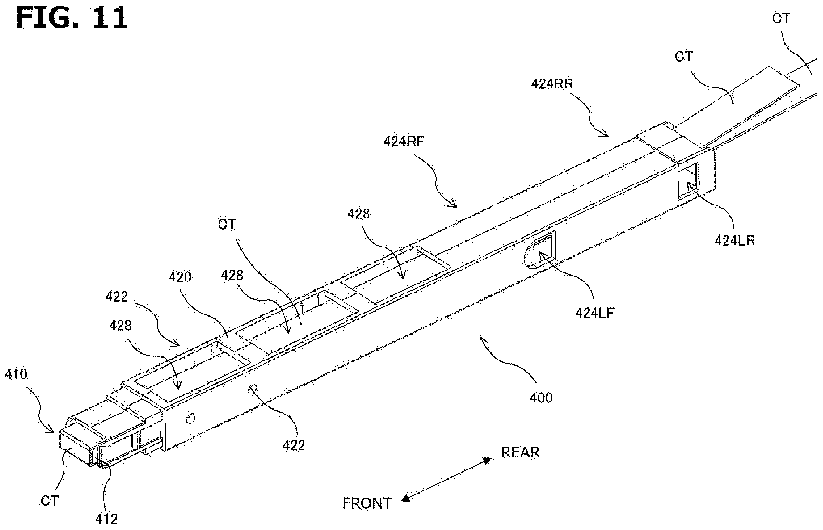

Fig. 1 is a perspective view showing the overall outline of a cleaning tool 10 according to an embodiment of the invention. Fig. 2 is a perspective view showing the overall outline of the cleaning tool 10 in this embodiment and an optical connector OC. Fig. 3 is a side view showing the left side surface of the cleaning tool 10 in this embodiment. Fig. 4 is a side view showing the right side surface of the cleaning tool 10 in this embodiment. Fig. 5 is a perspective view showing a state in which a right housing 110R of the cleaning tool 10 in this embodiment is removed. Fig. 6 is a perspective view showing a state in which a left housing 110L of the cleaning tool 10 in this embodiment is removed. Fig. 7 is a perspective view showing a state in which a supply reel 200 and a take-up reel 300 of the cleaning tool 10 in this embodiment are removed. Fig. 8 is a perspective view showing the configuration of the right housing 110R of the cleaning tool 10 in this embodiment. Fig. 9 is a perspective view showing the configuration of the left housing 110L of the cleaning tool 10 in this embodiment. Fig. 10 is a perspective view showing the configuration of a head section 400 (a head section 400 and a head holder 420) of the cleaning tool 10 in this embodiment. Fig. 11 is a perspective view showing a path of a cleaner CT in the head section 400 of the cleaning tool 10 in this embodiment. Note that in Figs. 5 to 9, a cap 160 is omitted for convenience.

### <<<< Cleaning Tool 10 >>>>

The cleaning tool 10 is a cleaning tool (cleaning instrument) for an optical connector to clean an end surface of a ferrule for the optical connector by using a cleaner CT.

### <<< Direction >>>

The directions used herein will be described (see Figs. 1 and 2).

### <Front/Rear/Longitudinal>

The side on or the direction in which the cleaning head 410 of the cleaning tool 10 is located is set to the front side or the front direction, and the side on or the direction in which the housing 100 is located is set to the rear side or the rear direction. Note that the front-rear direction may be referred to as the longitudinal direction of the head section 400.

### <Right/Left>

The right side or direction when viewed from the rear side to the front side is referred to as the right side or the right direction, and the left side or the direction when viewed from the rear side to the front side is referred to as the left side.

### <Lower/Upper>

Further, the side on or the direction in which the coil spring 140 is located is referred to as the lower side, lower direction, or lower portion, and the side on or the direction in which the supply reel 200 or the take-up reel 300 is located is referred to as the upper side, upper direction, or upper portion.

### <Upstream/Downstream>

The side on which the cleaner CT is sent out and supplied is referred to as the upstream side, and the side on which the cleaner CT is taken up is referred to as the downstream side. The supply reel 200 described later is located upstream, and the take-up reel 300 is located downstream.

### <Cleaner CT>

The cleaner CT is long and flexible, and has at least a resin layer. When the resin layer comes into contact with the end surface of the connector and the guide pin GP, dirt such as dust can be removed. The cleaner CT has, for instance, an integrally continuous shape such as a tape-like shape or a thread-like shape.

The width of the cleaner CT is not particularly limited, and may be at least the width of the end surface ES of the ferrule FE for the optical connector to be cleaned, or the width including the guide pin GP or more.

The thickness of the cleaner CT is not particularly limited, and may be, for instance, from 0.05 mm to 2 mm.

The cleaner CT may be a resin layer alone or may be laminated on a base material. Further, a release film may be stacked thereon. The base material may be used as a support material if the resin layer alone cannot support the cleaner CT. The release film may be used to protect the cleaning surface of the cleaner CT from dirt and damage while the cleaning tool 10 in the invention is not in use.

The cleaner CT is sent to the cleaning head, and is brought into contact with the end surface ES and the guide pin GP of the ferrule FE for the optical connector on the cleaning head. At this time, the base material is layered on a resin layer surface in contact with the cleaning head. Further, the release film is laminated on a resin layer surface opposite to the base material. The release film is peeled off and excluded from the cleaner CT before the cleaner CT reaches the cleaning head.

The resin layer is not particularly limited as long as dirt can be removed by contact with the end surface ES and the guide pin GP of the ferrule FE for the optical connector. Examples thereof include adhesives, resin foams (foams), flexible resins in which the guide pin GP can be embedded or through which the guide pin GP can pierce or penetrate, non-woven fabrics, and woven fabrics.

As the adhesive material, known materials can be used, and examples thereof include rubber-based adhesives, acrylic adhesives, silicone-based adhesives, and urethane-based adhesives. Additives such as a tackifier and a filler may be blended in these adhesives. Known adhesives have an advantage because they are readily available and the adhesive strength and the effect of preventing adhesive residue can be easily modified.

The adhesive may be a bonding agent if the adhesive functions to attach dirt to the cleaner CT by contact, and a weakly tacky olefin-based bonding agent, for instance, may be used. The bonding agent preferably exerts an action of suppressing or preventing contamination of, for instance, an adhesive residue on the connector end surface when it comes into contact with the connector end surface and the guide pin GP.

Those known as a resin foam (foam) may be used in the above. The mechanism by which dirt can be captured on the cleaning surface formed by the resin foam (foam) needs to be elucidated. However, one mechanism may involve that, for instance, dirt pressed on a flexible cleaning surface is embedded (half-embedded) and is not readily detached from the cleaning surface, and is so captured by the resin foam (foam).

Another mechanism considered may involve that when the end surface ES or guide pin GP of the ferrule FE for the optical connector is pressed against the resin foam (foam), cells in the resin foam (foam) are crushed and the internal air is discharged outside; part of the open cells is further crushed and cut off; and at this time, the pressure between the surface of the resin foam (foam) and the end surface ES of the ferrule FE for the optical connector or the surface of the guide pin GP is reduced, so that the dirt is adsorbed. Still another mechanism may involve that small dust is sucked into cells, and dust larger than each cell is adsorbed because the pressure inside the cells is reduced.

In addition, as a result of various examinations, it has been found that a contaminant is not attached to the guide pin GP even when the guide pin GP is made to penetrate through the resin foam (foam). This is because the resin foam (foam) has cells and is thus a very flexible material, and the guide pin GP easily pierces and penetrates therethrough. Hence, it is considered that when the guide pin GP pierces and penetrates through the resin foam (foam), the resin foam (foam) is entangled with the side surface of the guide pin GP and can efficiently remove dust on the side surface of the guide pin GP. Those other than the resin foam may be preferably used as long as any contaminant does not adhere to the guide pin GP by the penetration.

The material for the resin foam (foam) is not particularly limited, and known materials may be used. Examples include each resin foam (foam) containing, for instance, urethane resin, (meth)acrylic resin, saturated polyester resin, vinyl acetate resin, vinyl chloride resin, epoxy resin, olefin resin, styrene resin, melamine resin, urea resin, phenol resin, or silicone resin. At least one or a plurality of these materials may be used in combination. Among them, urethane foam is preferable because of excellent flexibility and lower compression strain. In addition, (meth)acrylic foam is preferably used because of excellent strength, light weight, and superior heat insulation. Further, the resin foam (foam) may be used as a mixture of urethane foam and (meth)acrylic foam. This case is preferable because characteristics of the urethane foam and characteristics of the acrylic foam can be adjusted, depending on its blending ratio, in accordance with their usage.

The structure of cells contained in the resin foam (foam) is not particularly limited, and known structures may be used. The structure of cells may be a closed cell structure in which each cell exists independently in the resin foam (foam) or an open cell structure in which each cell is continuously connected in the resin foam (foam). The open cell structure includes a case where each cell is connected by a communication through-hole or a case where a wall portion of each closed cell is broken and connected. As described above, the guide pin GP may easily pierce or penetrate through the resin foam (foam), and dust can thus be efficiently removed. For this reason, the resin foam (foam) having an open cell structure is preferable.

The process for producing the resin foam (foam) is not particularly limited, and the foam may be produced by a known process. For instance, the resin foam (foam) may be produced by either chemical foaming or physical foaming, or may be an open cell foam in which closed cells are formed and the cells are then physically crushed and communicated. For instance, the process for producing a foam as disclosed in JP 2012-56985A is suitable.

Known flexible resins may be used in the above, and examples thereof include polyurethane resin or polyacrylic resin. Further, a gel material obtained by gelling them may be included. It is possible to use, as the gel material, what is commonly called a polyurethane gel such as a soft polyurethane resin. The gel material is readily deformed, and the guide pin GP should easily pierce or penetrate therethrough or should be easily embedded therein. In this case, even if the adhesive strength of the gel material is weak, dirt can be removed from the end surface and the guide pin GP of the optical connector by the embedding effect due to the softness of the soft polyurethane and by piercing or penetration.

In addition, since the gel material is slightly adhesive, the optical connector is easily detachable, no adhesive residue, etc., remains, and recycling is possible by wiping the surface of the dirt-attached soft polyurethane with a water-wetted dust-free cloth. Examples of the soft polyurethane that can be preferably used include the soft composition disclosed in JP 2001-316448A.

The material for the base material is not particularly limited, and known materials may be used. For instance, synthetic resin, resin such as natural resin, rubber such as natural rubber or synthetic rubber, natural fiber, synthetic fiber, fiber, or paper may be shaped like a sheet for use. Any of these materials can be used as long as the effects of the invention are not impaired. For instance, an extruded resin sheet, a narrowly cut processed resin sheet, twisted fibers, a fiber woven fabric (e.g., a mesh material, woven fabric), a laminated cloth, a non-woven fabric, or a paper may be used.

It is possible to use, as the fiber woven fabric, for instance, a mesh material having a mesh structure with a mesh size of about 0.5 to 2.0 mm.

When the cleaner CT and the optical connector come into contact with each other, the cleaner CT may be deformed to follow the shape of the guide pin GP and the hole. In this case, the cleaner CT needs flexibility. Thus, the preferable base material is an olefin-based or polyvinyl chloride-based synthetic resin.

Meanwhile, when the cleaner CT and the optical connector come into contact with each other, the guide pin GP may penetrate through the cleaner CT. In this case, it is preferable to use a base material having an easy-to-penetrate structure and/or made of easy-to-penetrate material. Examples of the base material that can be preferably used include a fiber woven fabric structured like a net, a laminated cloth, or a non-woven fabric.

As the base material, a void-containing material such as a fiber woven fabric, a laminated cloth, or a non-woven fabric may be used. In this case, part of the resin layer may enter (infiltrate) voids of the base material. Such a state causes the base material to be firmly and tightly attached to the resin layer. This produces an advantage that adhesive residue is less likely to occur when the cleaner CT is removed from the end surface ES or guide pin GP of the ferrule FE for the optical connector while the adhesive residue occurs when the resin layer is detached from the base material and then attached to the end surface ES or guide pin GP of the ferrule FE for the optical connector.

A paper, non-woven fabric, woven fabric, or resin film may be preferably used as a base material made of easy-to-penetrate material. Examples of the easy-to-penetrate resin that can be preferably used include, but are not particularly limited to, a resin, like a polyolefin resin such as polyethylene resin, which can be easily broken after extended to a certain length, or an easy-to-cut or -processed resin like polypropylene (PP) resin or polyethylene terephthalate (PET) resin that is uniaxially or biaxially drawn.

As the material for the release film, known materials may be used and are not particularly limited. The surface of the sheet-shaped material such as a resin film or paper on the resin layer side may be subjected to release treatment. The release treatment is not particularly limited, and examples thereof include a process for applying a release agent such as dimethylsiloxane.

### <<< Configuration of Cleaning Tool 10 >>>

The cleaning tool 10 mainly includes a housing 100, a supply reel 200, a take-up reel 300, a head section 400, and a take-up controller 500. These housing 100, supply reel 200, take-up reel 300, head section 400, and take-up controller 500 are formed of, for instance, ABS resin (acrylonitrile/butadiene/styrene copolymer synthetic resin) or POM (polyacetal) resin.

### <<< Housing 100 >>>

The housing 100 rotatably holds the supply reel 200 and the take-up reel 300. The housing 100 houses the supply reel 200 and the take-up reel 300 along the front-rear direction. In the housing 100, the take-up reel 300 is located on the front side and the supply reel 200 is located on the rear side. The housing 100 has an elongated shape as a whole.

The housing 100 has a recess 150 in the region between the supply reel 200 and the take-up reel 300, which makes it easy for a worker's fingers to engage and allows the worker to operate accurately.

The housing 100 has a right housing 110R and a left housing 110L. The housing that includes a right side portion of the housing 100 is the right housing, and the housing that includes a left side portion of the housing 100 is the left housing. The right housing 110R has a locking claw 154 and the left housing 110L has a locking hole 152. The outer shape of the right housing 110R and the outer shape of the left housing 110L has an approximately linearly symmetric shape. The right housing 110R faces the left housing 110L and the locking claw of the right housing 110R is locked into the locking hole of the left housing 110L, so that the housing 100 can be integrated.

### << Right Housing 110R >>

The right housing 110R is a housing that includes, as a component, the right side portion of the housing 100.

### <Guide Groove 112R>

Two guide grooves 112R are provided at a lower part of the right housing 110R. The guide grooves 112R are engaged with the guide ridge 512R formed on the right side surface of the take-up controller 500, so that the take-up controller 500 can be moved while being guided in the front-rear direction.

### <Stopper 114RF and Stopper 114RR>

The stopper 114RF is located forwardly of a lower part of the right housing 110R, and the stopper 114RR is located behind the lower part of the right housing 110R. The stopper 114RF defines the maximum front position MF of the take-up controller 500, and the stopper 114RR defines the maximum rear position MR of the take-up controller 500.

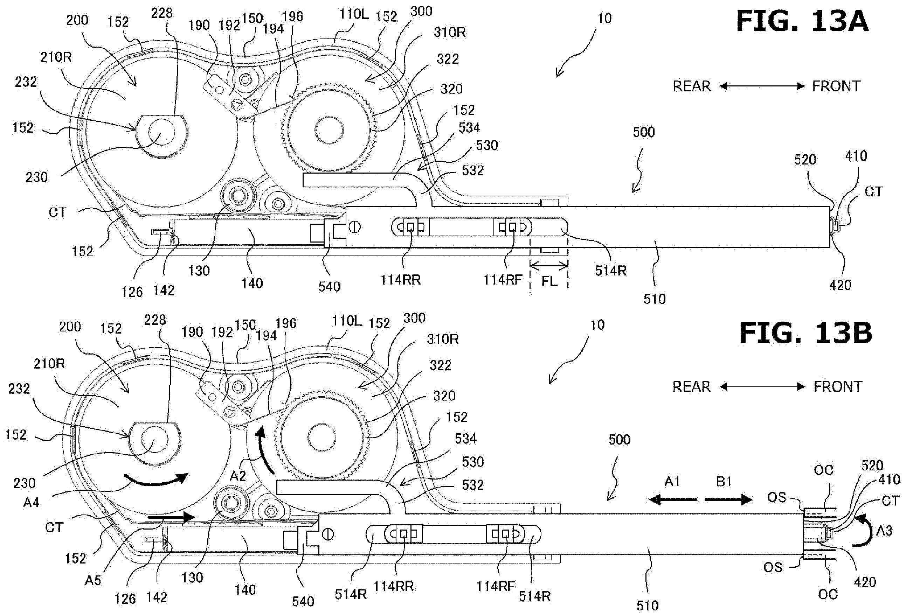

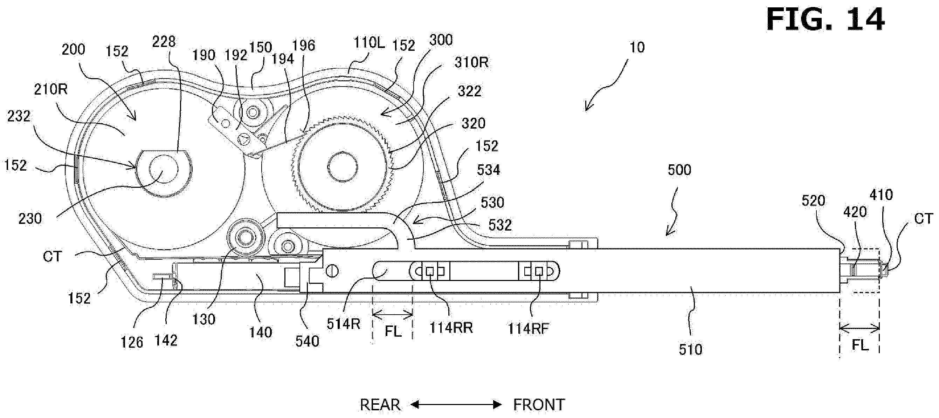

The stopper 114RF and the stopper 114RR are engaged with the movement control hole 514R formed on the right side of the take-up controller 500 to stop the take-up controller 500 at the maximum front position MF (the state shown in Fig. 13A described later) or stop the take-up controller 500 at the maximum rear position MR (the state shown in Fig. 14 described later).

Further, the stopper 114RF is engaged with the front locking hole 424RF formed on the right side surface of the head holder 420, and the stopper 114RR is engaged with the rear locking hole 424RR formed on the right side surface of the head holder 420. In this way, the head holder 420 is locked on the housing 100.

### <Front Protrusion 116 and Rear Protrusion 118 (Rotatably Held)>

The front protrusion 116 and the rear protrusion 118 are formed protruding in the right direction. The through-hole 330 for the take-up reel 300 is formed on the front protrusion 116, and the front protrusion 116 rotatably supports the take-up reel 300. The rear protrusion 118 is inserted into a through-hole 230 of the supply reel 200, and the rear protrusion 118 rotatably supports the supply reel 200.

### <Remaining Amount-Checking Window 120>

The remaining amount-checking window 120 is a through-hole for visually recognizing the amount (remaining amount) of the remaining cleaner CT wound around the supply reel 200. A worker can check the remaining amount of the cleaner CT and proceed with the operation.

### <Pawl Holder 122R>

The pawl holder 122R is formed like a recess (like a cavity), and can accommodate and hold a fixing end 192 of a take-up reel pawl 190. The fixing end 192 of a take-up reel pawl 190 is fixed to the pawl holder 122R.

### <Spring Holder 124R>

The spring holder 124R faces a spring holder 124L, which will be described later, and holds the coil spring 140 in a stretchable manner. In particular, even when the coil spring 140 is in a contracted state, the shape of the coil spring 140 can be kept like a cylinder and the coil spring 140 can be held stably.

### <Spring Stopper Housing 128>

The spring stopper housing 128 houses a spring stopper 126, which will be described later, formed in the left housing 110L. The spring stopper 126 is covered by the spring stopper housing 128 to be able to prevent a fixing end 142 of the coil spring 140 locked to the spring stopper 126 from coming off from the spring stopper 126.

### <<Left Housing 110L >>

### <Guide Groove 112L>

Two guide grooves 112L are provided at a lower part of the left housing 110L.

The guide grooves 112L are engaged with the guide ridge 512L formed on the left side surface of the take-up controller 500, so that the take-up controller 500 can be moved while being guided in the front-rear direction.

### <Stopper 114LF and Stopper 114LR>

The stopper 114LF is located forwardly of a lower part of the left housing 110L, and the stopper 114LR is located rearward the lower part of the left housing 110L. Like the stoppers 114RF and 114RR, they define the maximum front position MF and the maximum rear position MR of the take-up controller 500. Specifically, the stopper 114LF defines the maximum front position MF of the take-up controller 500, and the stopper 114LR defines the maximum rear position MR of the take-up controller 500.

The stopper 114LF and the stopper 114LR are engaged with the movement control hole 514L formed on the left side of the take-up controller 500 to stop the take-up controller 500 at the maximum front position MF or stop the take-up controller 500 at the maximum rear position MR.

Further, the stopper 114LF is engaged with the front locking hole 424LF formed on the left side surface of the head holder 420, and the stopper 114LR is engaged with the rear locking hole 424LR formed on the left side surface of the head holder 420. In this way, the head holder 420 is locked on the housing 100.

### <Pawl Holder 122L>

The pawl holder 122L is formed like a recess (like a cavity), and can accommodate and hold a fixing end 182 of the supply reel pawl 180. The fixing end 182 of the supply reel pawl 180 is fixed to the pawl holder 122L.

### <Spring Holder 124L>

As described above, the spring holder 124L faces the spring holder 124R, and holds the coil spring 140 in a stretchable manner.

### <Spring Stopper 126>

The spring stopper 126 locks the fixing end 142 of the coil spring 140. The spring stopper 126 can stably hold the coil spring 140 even when the coil spring 140 expands and contracts. The spring stopper 126 is housed in the spring stopper housing 128 formed at the right housing 110R described above. This makes it possible to prevent the fixing end 142 of the coil spring 140 from coming off from the spring stopper 126.

### << Cleaner Guide Roller 130 >>

The cleaner guide roller 130 is rotatably provided between the supply reel 200 and the take-up reel 300. The cleaner guide roller 130 has a substantially cylindrical shape. The cleaner guide roller 130 abuts on the cleaner CT to bend the cleaner CT and change the transfer direction of the cleaner CT. Specifically, the direction of the cleaner CT sent out from the supply reel 200 can be changed in a certain direction to guide the cleaner CT toward the cleaning head 410. The cleaner CT may be adjusted and directed in a certain direction to reliably send the cleaner CT toward the cleaning head 410 regardless of the remaining amount of the cleaner CT wound around the supply reel 200.

### << Coil Spring 140 >>

The coil spring 140 is a coil-shaped spring, and is formed in a stretchable manner. Note that in each figure, the coil spring 140 is shown in a columnar shape for convenience. The coil spring 140 generates an urging force in response to the state of expansion or contraction. The coil spring 140 has two ends, the fixing end 142 and a moving end 144. The fixing end 142 is locked to the spring stopper 126 of the left housing 110L. The moving end 144 is engaged with the coil spring pressing portion 540 of the take-up controller 500. When the take-up controller 500 moves to the rear side, the coil spring 140 contracts, and when the take-up controller 500 moves to the front side, the coil spring 140 expands. The coil spring 140 applies an urging force to the take-up controller 500.

### << Supply Reel Pawl 180 >>

The supply reel pawl 180 is structured like a leaf spring, and has a fixing end 182 and a leaf spring 184. The fixing end 182 is fixed to the pawl holder 122L of the left housing 110L. The leaf spring 184 has a long shape and can be elastically deformed while bent in a direction perpendicular to the longitudinal direction.

The tip of the leaf spring 184 has an engaging end 186. The engaging end 186 has a curved shape. The engaging end 186 is engaged with a ratchet gear 222 of a pinion 220 of the supply reel 200. The leaf spring 184 functions as a ratchet claw. The ratchet mechanism exerted by the leaf spring 184 will be described later.

### << Take-Up Reel Pawl 190 >>

The take-up reel pawl 190 is structured like a leaf spring, and has a fixing end 192 and a leaf spring 194. The fixing end 192 is fixed to the pawl holder 122R of the right housing 110R. The leaf spring 194 has a long shape and can be elastically deformed while bent in a direction perpendicular to the longitudinal direction.

The tip of the leaf spring 194 has an engaging end 196. The engaging end 196 has a curved shape. The engaging end 196 is engaged with a ratchet gear 322 of a pinion 320 of the take-up reel 300. The leaf spring 194 functions as a ratchet claw. The ratchet mechanism exerted by the leaf spring 194 will be described later.

### << Cap 160 and Cap Holder 170 >>

The cap 160 is a cover for detachably covering the cleaning head 410. The cleaning head 410 may be covered with the cap 160 to prevent contamination in the resin layer RL of the cleaner CT. Also, a cap holder 170 is formed at a rear portion of the housing 100. During cleaning with the cleaning tool 10, it is necessary to remove the cap 160 from the cleaning head 410. The removed cap 160 may be attached to the cap holder 170.In this case, a worker can carry out cleaning without manually holding the cap 160, so that the cleaning work can be simplified.

### <<< Supply Reel 200 >>>

The supply reel 200 mainly has a left supply reel frame 210L and a right supply reel frame 210R. An unused cleaner CT is wound between the left supply reel frame 210L and the right supply reel frame 210R so that the cleaner CT can be sent out (can be supplied).

### << Left Supply Reel Frame 210L >>

The left supply reel frame 210L is shaped approximately like a disk. The left supply reel frame 210L mainly has the pinion 220, a fixing part 224, and the through-hole 230.

### <Pinion 220>

The left supply reel frame 210L has the pinion 220. The pinion 220 is formed on the outside of the left supply reel frame 210L (on the side facing the left housing 110L). The pinion 220 has a substantially cylindrical shape with a low height. The pinion 220 is integrated coaxially with the left supply reel frame 210L. The ratchet gear 222 is formed along the outer peripheral surface of the pinion 220.

The ratchet gear 222 has, as components, tooth rows having asymmetric tooth surfaces. Each tooth of the ratchet gear 222 has a tooth surface with a small pressure angle (a tooth surface with a steep inclination (large inclination)) (hereinafter, referred to as a more inclined tooth surface) and a tooth surface with a large pressure angle (a tooth surface with a gentle inclination (small inclination)) (hereinafter, referred to as a less inclined tooth surface) between tooth tips. The more inclined tooth surface provides an engaging surface, and the less inclined tooth surface provides a slip surface and a sliding surface. The inclination of the tooth surface can define a rotation direction (rotation-permitted direction) in which the rotation of the supply reel 200 is permitted and a rotation direction (rotation-prohibited direction) in which the rotation is prohibited. The ratchet gear 222 and the engaging end 186 of the supply reel pawl 180 described above are components of a ratchet mechanism (return prevention mechanism).

By this ratchet mechanism, the supply reel 200 may be permitted to rotate (e.g., clockwise) in the first rotation direction (rotation-permitted direction), while the supply reel 200 may be prohibited to rotate (e.g., counterclockwise) in the second rotation direction (rotation-prohibited direction) opposite to the first rotation direction.

### <Fixing Part 224>

The fixing part 224 is formed protruding from a center region of the left supply reel frame 210L. In the supply reel 200, the fixing part 224 is oriented toward the right supply reel frame 210R. The fixing part 224 has a gap (not shown (similar to a gap 326 of a fixing part 324 of the take-up reel 300 described later)), and a first end (not shown) on the longitudinal side of the cleaner CT is interposed in the gap to fix the cleaner CT. A flat portion 228 is formed at the tip of the fixing part 224 and can hold the right supply reel frame 210R.

The through-hole 230 is formed in the center region of the left supply reel frame 210L, and the rear protrusion 118 of the right housing 110R is inserted into the through-hole 230.

### <Right Supply Reel Frame 210R>

The right supply reel frame 210R is shaped approximately like a disk. A circular through-hole 232 is formed at a center region of the right supply reel frame 210R, and the fixing part 224 of the left supply reel frame 210L is inserted into the through-hole 232.

### <Function of Supply Reel 200>

The cleaner CT is wound in the gap between the left supply reel frame 210L and the right supply reel frame 210R. While the supply reel 200 is rotated, an unused cleaner CT wound around the supply reel 200 can be gradually sent out and sent out toward the cleaning head 410. When the cleaner is wound around and held on the supply reel 200, the adhesive resin layer is covered by an overlapping adjacent cleaner CT. When unwound, the overlapping adjacent cleaners CT are separated and the adhesive resin layer is then exposed.

### <<< Take-Up Reel 300 >>>

The take-up reel 300 has a right take-up reel frame 310R. A used cleaner CT is wound around the take-up reel 300.

### << Right Take-Up Reel Frame 310R >>

The right take-up reel frame 310R is shaped approximately like a disk. The right take-up reel frame 310R mainly has the pinion 320, the fixing part 324, and the through-hole 330.

### <Pinion 320>

The right take-up reel frame 310R has the pinion 320. The pinion 320 is formed on the outside of the right take-up reel frame 310R (on the side facing the right housing 110R). The pinion 320 has a substantially cylindrical shape with a low height. The pinion 320 is integrated coaxially with the right take-up reel frame 310R. The ratchet gear 322 is formed along the outer peripheral surface of the pinion 320.

The ratchet gear 322 has, as components, tooth rows having asymmetric tooth surfaces. Each tooth of the ratchet gear 322 has a tooth surface with a small pressure angle (a tooth surface with a steep inclination) and a tooth surface with a large pressure angle (a tooth surface with a gentle inclination) between tooth tips. The inclination of the tooth surface can define a rotation direction (rotation-permitted direction) in which the rotation of the take-up reel 300 is permitted and a rotation direction (rotation-prohibited direction) in which the rotation is prohibited. The ratchet gear 322 and the engaging end 196 of the take-up reel pawl 190 described above are components of a ratchet mechanism (return prevention mechanism).

By this ratchet mechanism, the take-up reel 300 may be permitted to rotate (e.g., clockwise) in the first rotation direction (rotation-permitted direction), while the take-up reel 300 may be prohibited to rotate (e.g., counterclockwise) in the second rotation direction (rotation-prohibited direction) opposite to the first rotation direction.

### << Fixing Part 324 >>

The fixing part 324 is formed protruding from the center region of the right take-up reel frame 310R. In the take-up reel 300, the fixing part 324 is oriented toward the left housing 110L. The fixing part 324 has the gap 326, and a second end (not shown) on the longitudinal side of the cleaner CT is interposed in the gap 326 to fix the cleaner CT. The through-hole 330 is created in the center region of the right take-up reel frame 310R, and the front protrusion 116 of the right housing 110R is inserted into the through-hole 330.

Note that although any left take-up reel frame is absent in this embodiment, a left take-up reel frame may be provided. The left take-up reel frame may be provided to accurately hold the cleaner CT after take-up.

### <<< Head Section 400 >>>

The head section 400 is arranged to project forwardly of the housing 100. The head section 400 has the cleaning head 410 and the head holder 420.

### << Cleaning Head 410 >>

The cleaning head 410 has a contact portion 412 for bringing the cleaner CT into contact with the end surface ES of the ferrule FE for the optical connector. The contact portion 412 has a size and a shape corresponding to the end surface ES of the ferrule FE for the optical connector.

### <Accommodation Hole 414>

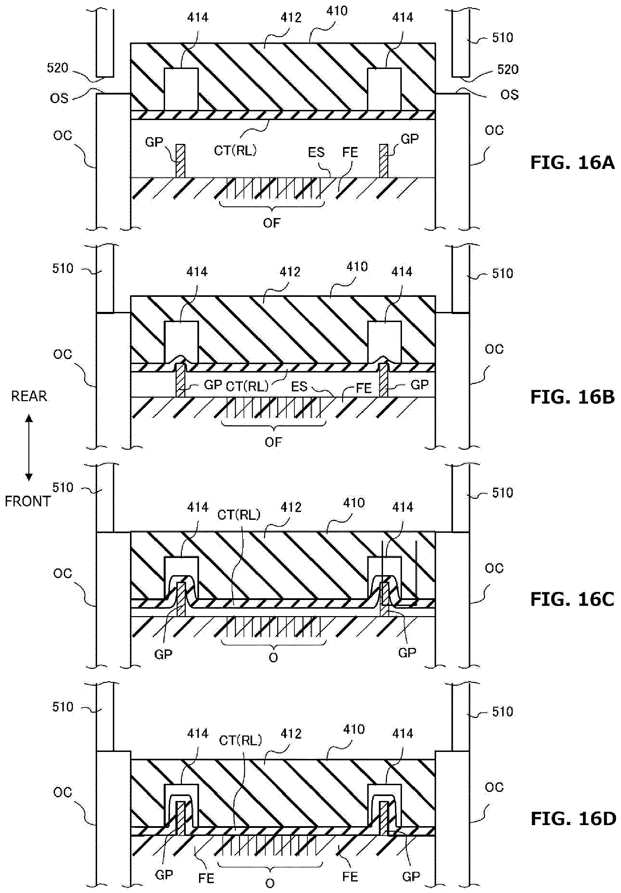

The contact portion 412 has two accommodation holes 414 for accommodating the two guide pins GP protruding from the end surface ES of the ferrule FE for the optical connector. Because the accommodation holes 414 are created, the resin layer RL of the cleaner CT can reach the root of each guide pin GP on the end surface ES of the ferrule FE for the optical connector. Also, dust at or near the root of each guide pin GP can be accurately removed. The removal of dust attached at or near the root of each guide pin GP will be described in detail later (see Figs. 16A to 17D described later).

The cleaning head 410 has a long, thin, flat rectangular parallelepiped shape. The cleaning head 410 is held at a fixed position on the front end 426 of the head holder 420, which will be described later. The cleaner CT sent out from the supply reel 200 is guided to the contact portion 412 and positioned at the contact portion 412. The cleaning head 410 can be detachably provided on the head holder 420. Depending on the end surface ES of the ferrule FE for the optical connector, the cleaning head 410 can be replaced, if appropriate, by the corresponding one.

The resin layer RL of the cleaner CT positioned at the contact portion 412 is made to face the end surface ES of the ferrule FE for the optical connector, and the resin layer RL is brought into contact with the end surface ES of the ferrule FE for the optical connector. Then, dust present on the end surface ES of the ferrule FE for the optical connector is transferred to the resin layer RL. By this transfer, dust on the end surface ES of the ferrule FE for the optical connector can be removed. After that, the cleaner CT is taken up from the contact portion 412 toward the take-up reel 300. The displacement of the cleaner CT will be described in detail later.

### << Head Holder 420 >>

The head holder 420 has a long and constant shape. Specifically, the head holder 420 has a long square tubular shape and a hollow structure. The head holder 420 houses the cleaner CT that can be displaced from the supply reel 200 to the take-up reel 300. Specifically, the head holder 420 houses the cleaner CT that is sent out from the supply reel 200, goes through the contact portion 412 of the cleaning head 410 as described above, and can be displaced until taken up by the take-up reel 300.

### <Holder Hole 422>

A holder hole 422 is formed on the front lateral surface of the head holder 420. A pin 416 formed on the cleaning head 410 is inserted into the holder hole 422. In this way, the cleaning head 410 can be held at a fixed position of the head holder 420.

### <Locking Holes 424RF and 424RR and Locking Holes 424LF and 424LR>

The two locking holes 424RF and 424RR are formed on the rear right side surface of the head holder 420. The locking hole 424RF is formed on the front side, and the locking hole 424RR is formed on the rear side. The front locking hole 424RF is engaged with the stopper 114RF of the right housing 110R, and the rear locking hole 424RR is engaged with the stopper 114RR of the right housing 110R.

In addition, the two locking holes 424LF and 424LR are formed on the rear left side surface of the head holder 420. The locking hole 424LF is formed on the front side, and the locking hole 424LR is formed on the rear side. The front locking hole 424LF is engaged with the stopper 114LF of the left housing 110L, and the rear locking hole 424LR is engaged with the stopper 114LR of the left housing 110L.

By using the locking holes 424RF and 424RR and the locking holes 424LF and 424LR, the head section 400 may be locked to the housing 100 to hold the head section 400 at a fixed position of the housing 100.

### << Location of Cleaning Head 410 >>

The cleaning head 410 is held and located at a certain position of the head holder 420 which has a fixed shape and is locked at a fixed position with respect to the housing 100. Thus, the cleaning head 410 is always at the fixed position with respect to the housing 100. That is, the cleaning head 410 does not move with respect to the housing 100 before, during, and after the cleaning work, and is held always at the fixed position with respect to the housing 100 and the head holder 420. The cleaning head 410 is held at the fixed position with respect to the housing 100 and the head holder 420.This allows the cleaner CT supplied to the contact portion 412 of the cleaning head 410 to be pressed, using a constant force, onto the end surface ES of the ferrule FE for the optical connector, thereby capable of reliably remove dust on the end surface ES regardless of a worker's skill.

The front end of the cleaning head 410 protrudes from the head holder 420, and the contact portion 412 of the cleaning head 410 is positioned protruding from the head holder 420. This allows the cleaner CT to be exposed to the outside, and the cleaner CT supplied to the contact portion 412 can be accurately brought into contact with the end surface ES of the ferrule FE for the optical connector.

Further, by projecting only the front end of the cleaning head 410 from the head holder 420, contamination in the resin layer RL of the cleaner CT is unlikely to occur. Note that the cap 160 described above may be attached to the cleaning head 410. In this case, the resin layer RL of the cleaner CT can be prevented from being contaminated when the cleaning tool 10 is unused, so that a clean state can be maintained.

### << Internal Structure of Head Holder 420 >>

Only the cleaning head 410 and the cleaner CT are disposed inside the head holder 420. That is, in the inside of the head holder 420, just a cleaner CT (supply cleaner CT) supplied from the supply reel 200 to the cleaning head 410, the cleaning head 410, and a cleaner CT (recovery cleaner CT) that goes through the cleaning head 410 and is taken up by the take-up reel 300 are present. In addition, the resin layer RL of the cleaner CT sent out from the supply reel 200 is in an exposed state. Due to this, the supply cleaner CT and the recovery cleaner CT are substantially linearly moved (on a flat plane) inside the head holder 420. This can prevent the resin layer RL of the cleaner CT from coming into contact with the inner wall of the head holder 420 and protect the resin layer RL from contamination.

Further, the movable controller main body 510, which will be described later, is arranged outside the head holder 420, and the head holder 420 functions as a partition wall. For instance, even when dust is generated due to sliding (movement) of the controller main body 510, the head holder 420 can block the dust and make it difficult for the dust to enter the inside of the head holder 420. As a result, contamination in the resin layer RL can be prevented.

Furthermore, the coil spring 140 for driving the controller main body 510 is located at a rear portion of the housing 100, that is, located at a position away from the head holder 420.Even if dust occurs due to expansion and contraction of the coil spring 140, the resin layer RL can be prevented from contamination.

Moreover, the coil spring 140 arranged at the rear portion of the housing 100 is housed inside the spring holders 124L and 124R.The spring holders 124L and 124R can function as partition walls. This can prevent dust from spreading due to the expansion and contraction of the coil spring 140.

### << Opening 428 >>

The head holder 420 has three openings 428 along the direction of movement of the cleaner CT. The head holder 420 has what is called a lightened shape. Because the three openings 428 are provided, the cleaner CT can be prevented from coming into contact with the head holder 420 when displaced inside the head holder 420. As a result, the cleaner CT can be kept clean. In addition, since the contact with the head holder 420 is prevented, the cleaner CT can be stably moved. The number of openings is not limited to three.

### <<< Take-Up Controller 500 >>>

The take-up controller 500 has the controller main body 510, a control end surface 520, a take-up extending portion 530, and the coil spring pressing portion 540.

### << Controller Main Body 510 >>

The controller main body 510 has a long substantially square tubular shape and has a through-hole in the longitudinal direction. That is, the controller main body 510 has a hollow structure, and the above-mentioned head section 400 (head holder 420 and cleaning head 410) is housed inside the controller main body 510. The controller main body 510 can move along the longitudinal direction of the head section 400 with respect to the head section 400 housed inside. The controller main body 510 can move outside the head section 400 along the longitudinal direction of the head section 400, and the movement of the controller main body 510 can cause the entire take-up controller 500 to move along the longitudinal direction of the head section 400 with respect to the head section 400 and the housing 100. The movement and operation of the take-up controller 500 will be described later.

### <Guide Ridge 512R and Guide Ridge 512L>

Two guide ridges 512R are formed on the right side surface of the controller main body 510. The two guiding ridges 512R are each shaped like a long ridge. The two guide ridges 512R are formed at two locations, an upper site and a lower site of the right side surface of the controller main body 510, and are in parallel to each other along the longitudinal direction of the controller main body 510.

Two guide ridges 512L are formed on the left side surface of the controller main body 510. The two guide ridges 512L are each shaped like a long ridge. The two guide ridges 512L are formed at two locations, an upper site and a lower site of the left side surface of the controller main body 510, and are in parallel to each other along the longitudinal direction of the controller main body 510.

### <Movement Control Hole 514R and Movement Control Hole 514L>

A long movement control hole 514R is formed on the right side surface of the controller main body 510. The movement control hole 514R is shaped like a substantially long oval through-hole. The movement control hole 514R is formed between the two long guide ridges 512R along the longitudinal direction of the controller main body 510.

A long movement control hole 514L is formed on the left side surface of the controller main body 510. The movement control hole 514L is shaped like a substantially long oval through-hole. The movement control hole 514L is formed between the two long guide ridges 512L along the longitudinal direction of the controller main body 510.

The movement control hole 514R and the movement control hole 514L are formed so as to face each other on the right side surface and the left side surface of the controller main body 510.

### << Control End Surface 520 >>

The control end surface 520 is an end surface formed at a front end portion of the controller main body 510. The control end surface 520 faces and comes into contact with the housing end surface OS of the optical connector OC, and is formed so as to be able to be engaged with the housing end surface OS. Specifically, the cleaning tool 10 may be gripped by a worker during the work of cleaning the end surface ES of the ferrule FE and the cleaning tool 10 may be brought close to the optical connector OC. In this case, first, the cleaning tool 10 is positioned such that the control end surface 520 faces the housing end surface OS of the optical connector OC. Next, the control end surface 520 is brought close to the housing end surface OS of the optical connector OC until they are in contact (engaged).

Further, the worker may apply force to the cleaning tool 10 while maintaining the state in which the control end surface 520 of the controller main body 510 is in contact (engagement) with the housing end surface OS of the optical connector OC. In this case, the controller main body 510 is pressed by the housing end surface OS to be displaced rearward relative to the housing 100. Also, the contact portion 412 of the cleaning head 410 is brought closer to the end surface ES of the ferrule FE for the optical connector OC. When the controller main body 510 is displaced rearward relative to the housing 100, a cleaner CT is newly sent out from the supply reel 200, and the cleaner CT to be supplied to the contact portion 412 of the cleaning head 410 should move.

When the worker further applies force to the cleaning tool 10, the controller main body 510 further moves rearward relative to the housing 100, and the contact portion 412 of the cleaning head 410 is brought closer to and comes into contact with the end surface ES of the ferrule FE for the optical connector OC. When the controller main body 510 further moves to the rear side of the housing 100, a cleaner CT is newly sent out from the supply reel 200, and the clean resin layer RL of the cleaner CT is supplied to the contact portion 412 of the cleaning head 410. Thus, when the contact portion 412 of the cleaning head 410 comes into contact with the end surface ES of the ferrule FE for the optical connector OC, the clean resin layer RL of the cleaner CT comes into contact with the end surface ES of the ferrule FE.

In this way, the worker applies force to the cleaning tool 10 and pushes the cleaning tool 10 onto the optical connector OC. As a result, a cleaner CT is sent out from the supply reel 200 while the contact portion 412 of the cleaning head 410 is brought closer to the end surface ES of the ferrule FE for the optical connector OC. This makes it possible to always bring the clean resin layer RL of the cleaner CT into contact with the end surface ES of the ferrule FE. Note that the specific movements of the cleaning head 410, the controller main body 510, and the cleaner CT will be described later with reference to Figs. 13A to 17D.

Note that when the worker applies force to the cleaning tool 10, the controller main body 510 moves relative to the housing 100 and the head section 400. This causes a state in which the contact portion 412 of the cleaning head 410 is engaged with the end surface ES of the ferrule FE for the optical connector OC. As a result, the take-up controller 500 and the controller main body 510 rest with respect to the optical connector OC. In reality, the housing 100 and the head section 400 are moved toward the optical connector OC.

### << Take-Up Extending Portion 530 >>

The take-up extending portion 530 is provided extending from the controller main body 510 toward the take-up reel 300. The take-up extending portion 530 has a curved part 532 and a rack formation part 534.

### <Curved Part 532> (Urging Force Generating Part)

The curved part 532 has a shape curved approximately 90 degrees. The curved part 532 projects substantially perpendicular to the longitudinal direction of the head section 400, is curved approximately 90 degrees, is substantially parallel to the longitudinal direction of the head section 400, and extends toward the take-up reel 300. The curved part 532 is made of material that can be elastically deformed, and can be elastically deformed accordingly.

### <Rack formation Part 534>

The rack formation part 534 is connected to the curved part 532 and has a substantially linear elongated shape. In the rack formation part 534, a rack (a row of teeth where the tooth tips are arranged on a plane) 536 is formed along the longitudinal direction of the head section 400. The rack 536 is engaged with the ratchet gear 322 of the take-up reel 300.

When the controller main body 510 is moved in the front-rear direction, the rack formation part 534 can also move in the front-rear direction. The take-up reel 300 can be rotated while the rack formation part 534 moves in the front-rear direction. The movements of the controller main body 510 and the take-up reel 300 will be described in detail later.

### <Coil Spring Pressing Portion 540>

The coil spring pressing portion 540 is formed at the rear end of the take-up controller 500. The moving end 144 of the coil spring 140 is engaged with the coil spring pressing portion 540. Side portions of the coil spring 140 are supported by the spring holder 124L and the spring holder 124R, and the coil spring 140 is stretchably held between the coil spring pressing portion 540 and the spring stopper 126 of the left housing 110L.

### <<<< Movement of Cleaning Tool 10 (How to Operate Cleaning Tool 10) >>>>

The following describes movement of the cleaning tool 10. As described above, a worker may push the cleaning tool 10 onto the optical connector OC to move the take-up controller 500 with respect to the housing 100 and the head section 400. Hereinafter, first, the movement of only the take-up controller 500 will be described, and then the movements of the take-up controller 500 and the take-up reel 300 will be described.

### <<< Movement of Take-Up Controller 500 (How to Operate Controller Main Body 510) >>>

As described above, the controller main body 510 has a hollow structure, and the controller main body 510 houses, in its inside, the head section 400 (head holder 420 and cleaning head 410) described above. The controller main body 510 can slide outside the head section 400 with respect to the head section 400 housed inside. Specifically, when the worker pushes the cleaning tool 10 onto the optical connector OC, the controller main body 510 is engaged with the housing end surface OS of the optical connector OC, and the controller main body 510 is displaced in the longitudinal direction of the head section 400 (that is, in the front-rear direction of the cleaner CT).

### <Maximum Front Position MF of Take-Up Controller 500>

Fig. 13A shows the state when the controller main body 510 is located at the frontmost position. When the movement control hole 514R is engaged with the stopper 114RF and the movement control hole 514L is engaged with the stopper 114LF, the controller main body 510 is locked by the stopper 114RF and the stopper 114LF. Accordingly, the controller main body 510 is located at the frontmost position (maximum front position MF). When no force is applied to the controller main body 510 by the worker, the urging force of the coil spring 140 causes the controller main body 510 to move forward and be positioned at the maximum front position MF. This maximum front position MF is the home position of the controller main body 510.

### <Intermediate Position of Take-Up Controller 500>

Fig. 13B shows a state in which the controller main body 510 has moved slightly rearward from the maximum front position MF. As described above, when the worker applies force to the cleaning tool 10 while maintaining the state in which the control end surface 520 of the controller main body 510 is in contact (engagement) with the housing end surface OS of the optical connector OC, the controller main body 510 is pressed by the housing end surface OS and moves from the maximum front position MF to the rear side of the housing 100. When the controller main body 510 has moved to the rear side, part of the controller main body 510 is housed inside the housing 100, part of the head holder 420 is exposed from the controller main body 510, and the contact portion 412 of the cleaning head 410 is brought closer to the end surface ES of the ferrule FE for the optical connector OC.

### <Contact with Ferrule FE>

When the controller main body 510 is further moved to the rear side by further increasing the force with which the worker pushes the cleaning tool 10 onto the optical connector OC, part of the head holder 420 is further exposed from the controller main body 510. Then, the contact portion 412 is brought into contact with the end surface ES of the ferrule FE for the optical connector OC.

### <Maximum Rear Position MR of Take-Up Controller 500>

In Fig. 14, when the movement control hole 514R is engaged with the stopper 114RR and the movement control hole 514L is engaged with the stopper 114LR, the controller main body 510 is locked by the stopper 114RR and the stopper 114LR. Accordingly, the controller main body 510 is located at the rearmost position (maximum rear position MR). In this way, the controller main body 510 can be stopped at the maximum rear position MR. The controller main body 510 may be stopped at the maximum rear position MR, and the worker may try to strengthen the force to push the cleaning tool 10 onto the optical connector OC and then to strongly press the ferrule FE for the optical connector OC. Even in this case, it is possible to prevent the ferrule FE from being damaged.

As described above, the coil spring 140 is provided at the rear portion of the controller main body 510, and the coil spring 140 applies an urging force to the controller main body 510. When the worker weakens the force applied to the controller main body 510, the controller main body 510 can move to the maximum front position MF and return to the home position by the urging force of the coil spring 140. In this way, the take-up controller 500 can move between the maximum front position MF and the maximum rear position MR.

### << Movements of Take-Up Controller 500 and Take-Up Reel 300 >>

As described above, the movement of the controller main body 510 can cause the take-up controller 500 to be displaced to the rear side or the front side of the cleaning tool 10. Here, the movement of the take-up controller 500 and the movement of the take-up reel 300 will be described.

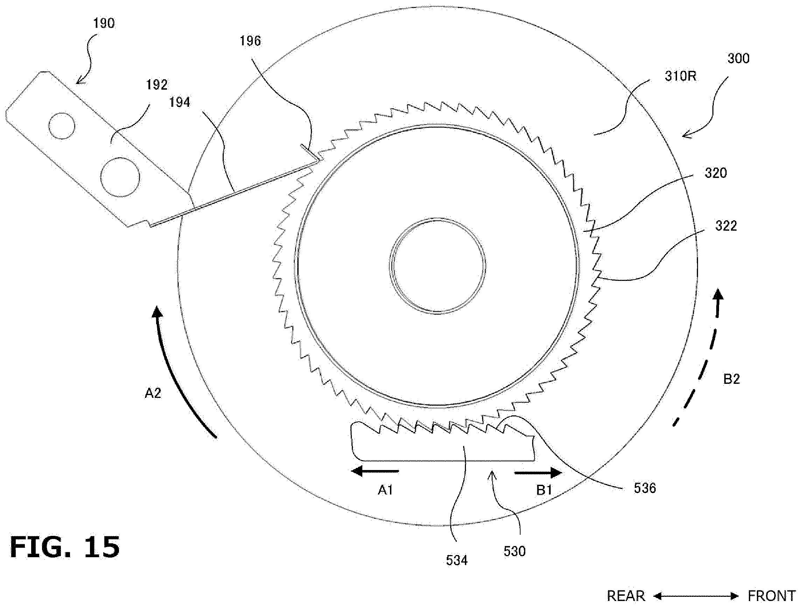

As described above, the controller main body 510 has the take-up extending portion 530, and the rack 536 is formed at the take-up extending portion 530. The rack 536 engages with the ratchet gear 322 of the take-up reel 300. In addition, the take-up reel pawl 190 has the leaf spring 194, and the leaf spring 194 has the engaging end 196. This engaging end 196 also engages with the ratchet gear 322 of the take-up reel 300. That is, two members, the rack 536 of the controller main body 510 and the engaging end 196 of the take-up reel pawl 190, are engaged with the ratchet gear 322 of the take-up reel 300. Then, the movement of the take-up reel 300 can be controlled by the state of engagement with each other. Fig. 15 is a schematic view showing a state of engagement between the rack 536 and the ratchet gear 322 and engagement between the engaging end 196 and the ratchet gear 322. Note that the rack 536 is covered by the take-up extending portion 530 (see, for instance, Figs. 13A to 14), but the rack 536 is depicted in Fig. 15 for explanation.

### << When Force Is Applied to Controller Main Body 510 >>

### <Engagement between Ratchet Gear 322 and Rack 536>

When a rearward force (see arrow A1 in Fig. 13B and Fig. 15) is applied to the controller main body 510, a more inclined tooth surface of the ratchet gear 322 of the take-up reel 300 and a more inclined tooth surface of the rack 536 of the take-up extending portion 530 face each other and are engaged. This engagement transmits, from the rack 536 of the take-up extending portion 530 to the ratchet gear 322 of the take-up reel 300, a force that can cause rotation of the take-up reel 300. In the drawings of Figs. 13B and 15, the force that allows the take-up reel 300 to rotate clockwise (see arrow A2) is transmitted. The rack-and-pinion mechanism is structured by the rack 536 of the take-up extending portion 530 and the ratchet gear 322 of the take-up reel 300, and converts the linear motion into a rotary motion to transmit the movement.

### <Disengagement between Ratchet Gear 322 and Engaging End 196>

When a force (force that can cause clockwise rotation in the drawings of Fig. 13B and Fig. 15 (see arrow A2)) is transmitted to the ratchet gear 322 of the take-up reel 300, the take-up reel 300 is moved in such a direction that a more inclined tooth surface of the ratchet gear 322 of the take-up reel 300 and a more inclined tooth surface of the engaging end 196 of the leaf spring 194 are apart from each other. This causes disengagement between the more inclined tooth surface of the ratchet gear 322 of the take-up reel 300 and the more inclined tooth surface of the engaging end 196 of the leaf spring 194. Thus, the rotational movement of the take-up reel 300 is not prohibited. In this way, when the worker applies force to the controller main body 510 to displace the take-up controller 500 rearward (see arrow A1 in Figs. 13B and 15), the take-up reel 300 can be rotated clockwise (see arrow A2 in Figs. 13B and Fig. 15).

Note that when the take-up reel 300 rotates (rotates clockwise in the drawings of Figs. 13B and 15), a small inclined small tooth surface of the engaging end 196 of the leaf spring 194 and a less inclined tooth surface of ratchet gear 322 of the take-up reel 300 come into contact with each other. Further, as the take-up reel 300 rotates, the leaf spring 194 is pressed by a tooth of the ratchet gear 322 while sliding in contact with the tooth of the ratchet gear 322, and is subject to gradual elastic deformation. When the engaging end 196 of the leaf spring 194 passes through a tooth tip of the ratchet gear 322, the leaf spring 194 is released from elastic deformation and returns to its original shape.

### <How to Pull and Supply Cleaner CT>

In this way, when a force is applied to the controller main body 510 and the take-up controller 500 moves rearward, the force is transmitted to the take-up reel 300 by the movement of the controller main body 510, thereby causing the take-up reel 300 to rotate. As the take-up reel 300 rotates, the cleaner CT is pulled (see arrow A3 in Fig. 13B) and is wound around the take-up reel 300. When the cleaner CT is pulled, a cleaner CT is newly sent out from the supply reel 200 (see arrow A4 in Fig. 13B), and the clean resin layer RL of the cleaner CT is supplied to the contact portion 412 of the cleaning head 410 (see arrow A5 in Fig. 13B). When a force is applied to the controller main body 510 and the take-up controller 500 moves rearward, the take-up controller 500 can be moved to the maximum rear position MR (the state in Fig. 14).

### << When Force Applied to Controller Main Body 510 Weakens >>

### <Engagement between Ratchet Gear 322 and Rack 536>

Next, when the force applied to the controller main body 510 weakens after the take-up controller 500 is displaced rearward, the take-up controller 500 attempts to move forward due to the urging force of the coil spring 140 as described above (see arrow B1 in Figs. 15 and 13B). That is, the take-up controller 500 attempts to move in a direction in which a more inclined tooth surface of the ratchet gear 322 of the take-up reel 300 and a more inclined tooth surface of the rack 536 of the take-up extending portion 530 are apart from each other. Accordingly, the more inclined tooth surface of the ratchet gear 322 of the take-up reel 300 and the more inclined tooth surface of the rack 536 of the take-up extending portion 530 disengages. Thus, the forward movement of take-up controller 500 is not prohibited.

Note that when the take-up controller 500 is moved forward, a less inclined tooth surface of the rack 536 of the take-up extending portion 530 comes into contact with a less inclined tooth surface of the ratchet gear 322 of the take-up reel 300. Further, as the take-up controller 500 moves, the take-up extending portion 530 is pressed by a tooth of the ratchet gear 322 while sliding in contact with the tooth of the ratchet gear 322, and is subject to gradual elastic deformation. When the rack 536 of the take-up extending portion 530 passes through a tooth tip of the ratchet gear 322, the elastic deformation is released and the rack 536 returns to its original shape.

### <Engagement between Ratchet Gear 322 and Engaging End 196>

Further, when the take-up controller 500 is moved forward, a less inclined tooth surface of the rack 536 of the take-up extending portion 530 comes into contact with a less inclined tooth surface of the ratchet gear 322 of the take-up reel 300. This applies force that allows the take-up reel 300 to rotate. In the drawing of Fig. 15, the force that allows the take-up reel 300 to rotate counterclockwise is transmitted (see the dashed arrow B2 of Fig. 15). When the force causing the counterclockwise rotation is transmitted to the ratchet gear 322 of the take-up reel 300, a more inclined tooth surface of the ratchet gear 322 of the take-up reel 300 and a more inclined tooth surface of the engaging end 196 of the leaf spring 194 face each other and are engaged. This engagement may transmit a force that allows the take-up reel 300 to rotate counterclockwise. Even in this case, the rotational movement of the take-up reel 300 is not prohibited; or the take-up reel 300 does not rotate counterclockwise. The engagement between the ratchet gear 322 and the engaging end 196 provides a return prevention mechanism.

### <Engagement between Ratchet Gear 222 and Engaging End 186>

As described above, the supply reel pawl 180 has the leaf spring 184, and the leaf spring 184 has the engaging end 186 (see Fig. 6). In addition, the supply reel 200 is provided with the ratchet gear 222. The engaging end 186 of the leaf spring 184 engages with the ratchet gear 222 of the supply reel 200. When a force in a direction in which the cleaner CT returns to the supply reel 200 is applied via the cleaner CT, a more inclined tooth surface of the ratchet gear 222 of the supply reel 200 and a more inclined tooth surface of the engaging end 186 of the leaf spring 184 face each other and are engaged. This engagement can prohibit the rotational movement of the supply reel 200 even when the force in a direction in which the cleaner CT returns to the supply reel 200 is transmitted. The engagement between the ratchet gear 222 and the engaging end 186 provides a return prevention mechanism.

In this way, when the force applied to the controller main body 510 weakens, the take-up reel 300 does not rotate, and the take-up controller 500 is moved forward by the urging force of the coil spring 140 (see arrow B1 in Figs. 15 and 13B). Accordingly, the take-up controller 500 can return to the home position while the cleaner CT wound around the take-up reel 300 is not released and can be maintained in the wound state (in the state in Fig. 13A). When the take-up controller 500 returns to the home position, the rotational movement of the take-up reel 300 is prohibited. This makes it possible to prevent the dust-contaminated cleaner CT from returning to the cleaning head 410.

### <Feed Length FL of Cleaner CT>

The take-up controller 500 is positioned at the maximum front position MF by the stopper 114RF and the stopper 114LF, and is positioned at the maximum rear position MR by the stopper 114RR and the stopper 114LR. Thus, the take-up controller 500 can always be displaced at a fixed distance (see FL in Figs. 13A and 14).Also, the feed length of the cleaner CT can be constant. This enables a clean resin layer RL to be constantly supplied to the contact portion 412 of the cleaning head 410 regardless of a worker's ability and skill level.

### <<< Cleaner CT Path >>>

The cleaner CT is wound around the supply reel 200, and the resin layer RL of the cleaner CT is covered by an adjacent cleaner CT. Due to this, the resin layer RL of the cleaner CT is not contaminated.

The supply reel 200 is held in the housing 100, and the cleaner CT sent out from the supply reel 200 is housed in the housing 100 and the head holder 420 until it reaches the cleaning head 410. As a result, the resin layer RL of the cleaner CT can be kept clean.

When the cleaner CT is sent out from the supply reel 200, the cleaner CT is unwound and the resin layer RL of the cleaner CT is exposed. After the cleaner CT is sent out from the reel 200, the resin layer RL of the cleaner CT preferably goes straight and reaches the cleaning head 410 without contact with any other member. A face opposite to the resin layer RL contacts on, for instance, a roller or a guide, and the path of the cleaner CT can be changed by them. In addition, even if the resin layer RL of the cleaner CT comes into contact with a member, the resin layer RL of the cleaner CT can be kept clean by using the clean member.

### <<<< Procedure for Cleaning Work >>>>

First, a worker brings the control end surface 520 close to the housing end surface OS of the optical connector OC until they are in contact (engaged). Next, when the worker applies force to the cleaning tool 10 while maintaining the state in which the control end surface 520 of the controller main body 510 is in contact (engagement) with the housing end surface OS of the optical connector OC, the controller main body 510 is pressed by the housing end surface OS and moves rearward relative to the housing 100. This brings the contact portion 412 of the cleaning head 410 close to the end surface ES of the ferrule FE for the optical connector OC.

As the controller main body 510 moves rearward relative to the housing 100 (arrow A1 in Fig. 13B), the take-up reel 300 rotates in the take-up direction at a rotation angle corresponding to the movement of the controller main body 510 (arrow A2 in Fig. 13B). The cleaner CT is pulled by the rotation of the take-up reel 300 (arrow A3 in Fig. 13B), and is wound around the take-up reel 300.

When the cleaner CT is pulled by the take-up reel 300 (arrow A3 in Fig. 13B), a cleaner CT is sent out from the supply reel 200 (arrow A4 in Fig. 13B), and a clean resin layer RL of the cleaner CT is supplied to the contact portion 412 of the cleaning head 410 (arrow A5 in Fig. 13B).

After that, the worker strengthens the force applied to the cleaning tool 10 to bring the contact portion 412 of the cleaning head 410 closer to the end surface ES of the ferrule FE for the optical connector. By pressing the resin layer RL of the cleaner CT against the end surface ES of the ferrule FE for the optical connector, dust on the end surface ES of the ferrule FE for the optical connector is transferred to the resin layer RL. This makes it possible to clean the end surface ES of the ferrule FE for the optical connector.

With this configuration, the cleaner CT can be pulled continuously as the controller main body 510 moves relatively. That is, the controller main body 510 continues to move and the cleaner CT is pulled until the contact portion 412 of the cleaning head 410 reaches the end surface ES of the ferrule FE for the optical connector OC. Accordingly, by the time until the resin layer RL of the cleaner CT is pressed onto the end surface ES of the ferrule FE for the optical connector, the cleaner CT located at the contact portion 412 of the cleaning head 410 is displaced to a position away from the contact portion 412.In this way, a clean resin layer RL of the cleaner CT is newly supplied and positioned at the contact portion 412. That is, before the resin layer RL of the cleaner CT comes into contact with the end surface ES of the ferrule FE for the optical connector, the clean resin layer RL of another cleaner CT can be newly supplied to the contact portion 412.

After the cleaning is completed, the worker weakens the force applied to the cleaning tool 10.Next, the urging force of the coil spring 140 causes the controller main body 510 to move relatively forward and then returns to the home position.

Note that when the controller main body 510 is moved forward, the ratchet gear 322 is locked by the engaging end 196. Thus, the rotational movement of the take-up reel 300 is prohibited. This can keep, at the position of the contact portion 412, the resin layer RL of the cleaner CT having been supplied to the contact portion 412 of the cleaning head 410 while the cleaner CT rests.

### <<<< Process of Cleaning with Cleaning Tool 10 >>>>

Figs. 16A to 16D are cross-sectional views showing a process of cleaning the end surface ES of the ferrule FE for the optical connector by using the cleaning tool 10. For instance, MPO connectors may be used for the cleaning. Figs. 16A to 16D show the relative positional relationship between the ferrule FE and the cleaner CT during the cleaning process. In the example shown in Figs. 16A to 16D, the ferrule FE is provided with ends of 12 optical fibers OF arranged side by side. In addition, the ferrule FE has two guide pins GP provided so as to project vertically (in a direction away from the end surface ES) relative to the end surface ES of the ferrule FE with the 12 optical fibers OF interposed therebetween.

First, as shown in Fig. 2, a worker grips the cleaning tool 10 and brings the cleaning head 410 of the cleaning tool 10 close to the opening OP of the optical connector OC so as to face each other. Next, the housing end surface OS of the optical connector OC is engaged with the control end surface 520 of the controller main body 510, and a force is then applied to the cleaning tool 10. By applying the force, the cleaning head 410 can be inserted into the opening OP of the optical connector OC while the controller main body 510 is housed in the housing 100.This can bring the contact portion 412 of the head section 400 close to the end surface ES of the ferrule FE for the optical connector OC. Further, by strengthening the force applied to the cleaning tool 10, the resin layer RL of the cleaner CT can be tightly attached to the end surface ES of the ferrule FE. The specific process will be described below.

First, as shown in Fig. 16A, when the worker inserts the cleaning head 410 into the opening OP of the optical connector OC, the resin layer RL of the cleaner CT faces the end surface ES of the ferrule FE at a distal position.

Further, as shown in Fig. 16B, when the worker applies a force to the cleaning tool 10 toward the optical connector OC, the control end surface 520 of the controller main body 510 engages with the housing end surface OS of the optical connector OC. This can bring the resin layer RL of the cleaner CT at the contact portion 412 of the head section 400 close to the end surface ES of the ferrule FE for the optical connector OC. In the state shown in Fig. 16B, the resin layer RL of the cleaner CT comes into contact with the tips of the two guide pins GP of the ferrule FE and is pressed by the two guide pins GP to elastically deform.

Next, as shown in Fig. 16C, when the worker further applies force, the resin layer RL of the cleaner CT is brought closer to the end surface ES of the ferrule FE for the optical connector OC. At this time, the resin layer RL is pressed by the two guide pins GP and an urging force (restoring force) generated in the resin layer RL is used to start covering the two guide pins GP.

Then, as shown in Fig. 16D, when the worker further applies force to the cleaning tool 10, the resin layer RL reaches the end surface ES of the ferrule FE. At this time, the areas of the resin layer RL elastically deformed by the contact with the two guide pins GP cover the roots of the two guide pins GP due to the urging force (restoring force) generated in the resin layer RL. The roots of the two guide pins GP are covered by the resin layer RL, so that the resin layer RL can be tightly attached to the entire end surface ES of the ferrule FE without creating a gap between the resin layer RL and the end surface ES of the ferrule FE. By attaching the resin layer RL to the roots of the two guide pins GP, dust on the entire end surface ES of the ferrule FE can be transferred using the adhesive force of the resin layer RL. The dust is attached to the end surface ES of the ferrule FE due to electrostatic force and so on. Dust around the roots of the two guide pins GP and dust attached to the two guide pins GP can also be transferred and removed by the adhesive force of the resin layer RL. The elastic modulus and hardness of the resin layer RL may be suitably selected. In this case, the urging force (restoring force) of the resin layer RL can be used to cover the entire two guide pins GP by the resin layer RL.

The cleaning head 410 has the accommodation holes 414 for accommodating the two guide pins GP. When the resin layer RL reaches the end surface ES of the ferrule FE, the resin layer RL, together with the entire guide pin GP, is accommodated in each accommodation hole 414. By providing each accommodation hole 414, dust can be accurately removed even in the case of ferrule FE having a guide pin GP. In addition, the resin layer RL can also be accommodated in the accommodation hole 414.Due to this, deformation of the resin layer RL due to the urging force (restoring force) is not prevented. As a result, the entire guide pin GP can be covered with the resin layer RL.

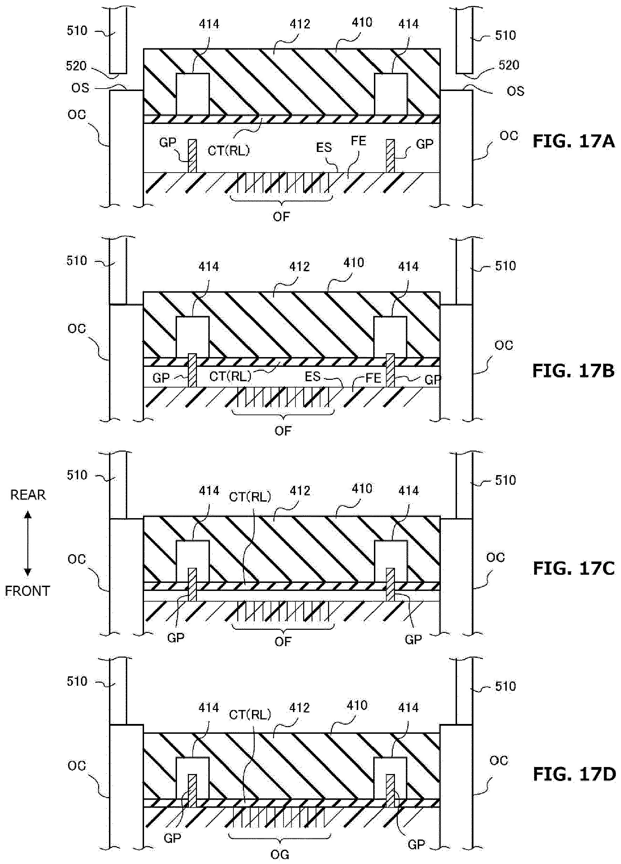

Figs. 16A to 16D described above illustrate an example in which the resin layer RL is elastically deformed according to the shape and size of the two guide pins GP without being punctured by the two guide pins GP; and the resin layer RL covers even the roots of the two guide pins GP by using the urging force (restoring force) generated in the resin layer RL. However, the resin layer RL may be punctured by the two guide pins GP to plastically deform the resin layer RL. Figs. 17A to 17D are diagrams showing an example of the case where the resin layer RL is subject to plastic deformation. Whether the resin layer RL is elastically deformed or plastically deformed may be determined, if appropriate, depending on the Shore A hardness of the resin layer RL.

Fig. 17A is in the same state as in Fig. 16A. As shown in Fig. 17B, when the two guide pins GP come into contact with the cleaner CT (resin layer RL) and are pressed, the resin layer RL is punctured by the two guide pins GP and is plastically deformed. The puncture starts from the beginning of contact with the two guide pins GP. Next, as shown in Fig. 17C, when the cleaner CT is pushed, plastic deformation progresses further, and the two guide pins GP are gradually stabbed into the resin layer RL. Finally, as shown in Fig. 17D, the cleaner CT reaches the end surface ES of the ferrule FE while the resin layer RL is plastically deformed. In this way, even when the resin layer RL is plastically deformed, the resin layer RL of the cleaner CT can be attached to the roots of the two guide pins GP. Even in this case, dust around the roots of the two guide pins GP and dust attached to the two guide pins GP can also be transferred and removed by the adhesive force of the resin layer RL.

### <<<< Modification Embodiment 1 >>>>

Although the cleaner CT shown in the above-described embodiment is an example without any release film, a release film may be provided on the cleaner CT. The release film is a film for coating the resin layer RL, and providing the release film makes it possible to maintain the adhesiveness of the resin layer RL and prevent contamination.

If a release film is provided on the cleaner CT, the cleaner CT together with the release film may be wound around the supply reel 200. When the cleaner CT is sent out from the supply reel 200, the release film can be peeled off and the cleaner CT is then supplied to the cleaning head 410.

To peel off the release film, the radius of curvature is reduced to bend the cleaner CT and the degree of bending of the cleaner CT is increased. This can make it easy to peel off the release film. Further, it is preferable to provide a release film storage reel for storing the peeled release film. This can prevent the peeled release film from coming into contact with the resin layer RL again and hindering the smooth movement of the cleaner CT. Further, it is possible to prevent deterioration of the adhesiveness of the resin layer RL or a decrease in the cleanliness by the contact with the peeled release film.

Instead of storing the peeled release film, a discharge hole may be created, so that the peeled film may be discharged from the housing 100 during the peeling. As a result, it is no longer necessary to secure a space for installing the release film storage reel. The miniaturization of the housing 100 can make the whole cleaning tool 10 smaller. Further, a cutter for cutting the discharged release film may be provided in the discharge hole.

### <<<< Modification Embodiment 2 >>>>

The cleaning tool 10 shown in the above-described embodiment is an example in which the take-up reel 300 is used to recover the cleaner CT in which dust is transferred by pressing it onto the end surface ES of the optical connector OC. The dust-contaminated cleaner CT may be discharged from the housing 100 by providing a discharge hole. Accordingly, it is no longer necessary to secure a space for providing the take-up reel 300. The miniaturization of the housing 100 can make the whole cleaning tool 10 smaller. Further, a cutter for cutting the discharged cleaner CT may be provided in the discharge hole.

### <<<< Modification Embodiment 3 >>>>

The cleaning tool 10 shown in the above-described embodiment is an example in which the take-up reel 300 is arranged on the front side of the housing 100 and the supply reel 200 is arranged on the rear side of the housing 100.However, the supply reel 200 may be arranged on the front side and the take-up reel 300 may be arranged on the rear side. The distance from the site of exposure of the resin layer RL to the contact portion 412 of the cleaning head 410 can be shortened. This makes it possible to reduce the possibility that the resin layer RL is contaminated, maintain the adhesiveness, and transfer dust accurately.

### <<<< Modification Embodiment 4 >>>>

The cleaning tool 10 shown in the above-described embodiment is an example in which the supply reel 200 and the take-up reel 300 are separated from each other and rotatably arranged on different rotation axes. However, the supply reel 200 and the take-up reel 300 may be rotated coaxially. This allows for the miniaturization in the front-rear direction.

### <<<< Modification Embodiment 5 >>>>

The cleaning tool 10 shown in the above-described embodiment is an example in which the housing 100 and the head section 400 are separately prepared and joined to form the cleaning tool 10, but the housing 100 and the head section 400 may be integrated in advance.

### <<<< Modification Embodiment 6 >>>>

The cleaning tool 10 shown in the above-described embodiment is an example in which only the take-up reel 300 is rotated due to the movement of the controller main body 510. However, the movement of the controller main body 510 may be transmitted to the ratchet gear 222 of the supply reel 200 to rotate the supply reel 200 as well as the take-up reel 300. This makes it unnecessary to rotate the supply reel 200 by pulling the cleaner CT. That is, it is unnecessary to apply a pulling force to the cleaner CT, and the cleaner CT can be prevented from being stretched or damaged by the pulling force.

### <<<< Modification Embodiment 7 >>>>

In the cleaning tool 10 of the above-described embodiment, the accommodation holes 414 for accommodating the two guide pins GP are provided, but no accommodation hole 414 may be provided. The contact portion 412 may be made into a flat shape without the accommodation holes 414.In the case of the ferrule FE without any guide pin GP, the resin layer RL may be pressed onto the end surface ES of the ferrule FE under uniform pressing force.

### <<<< Modification Embodiment 8 >>>>

The cleaning tool 10 shown in the above-described embodiment is an example in which the coil spring 140 is used to apply an urging force to the take-up controller 500 and the controller main body 510. Those which can generate an urging force are acceptable and examples include coil springs as well as various springs such as leaf springs or elastomers made of, for instance, rubber resin.

### <<<< Modification Embodiment 9 >>>>

The cleaning tool 10 shown in the above-described embodiment is an example in which the supply path and the recovery path of the cleaner CT are in parallel inside the head holder 420.However, the supply path and the recovery path are not necessarily in parallel.

### <<<<< Other Embodiments >>>>>

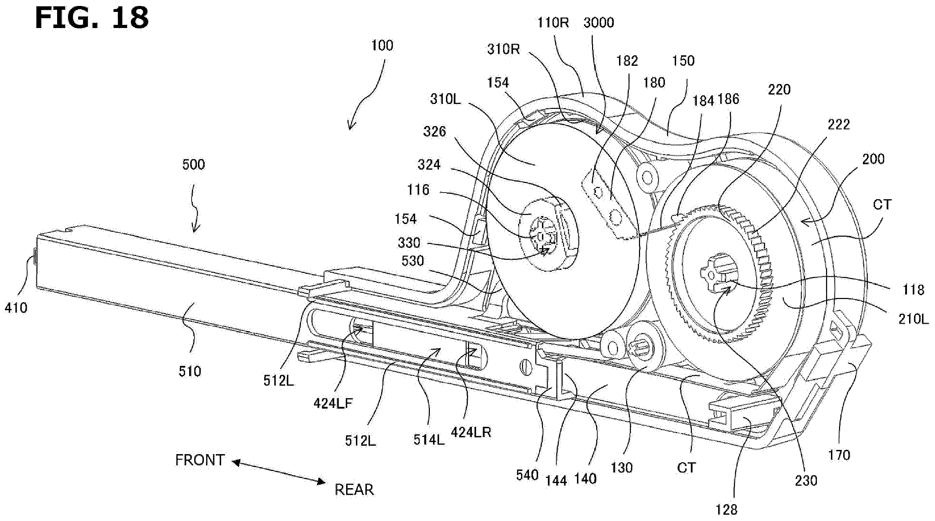

Fig. 18 is a perspective view showing a state in which the supply reel 200 and the take-up reel 3000 of the cleaning tool 10 are removed.

The cleaning tool 10 shown in Fig. 18 has the same configuration except that the take-up reel 3000 is different from the take-up reel 300 of the cleaning tool 10. The take-up reel 300 of the cleaning tool 10 has only the right take-up reel frame 310R. On the other hand, the take-up reel 3000 has the right take-up reel frame 310R and a left take-up reel frame 310L. This configuration enables the cleaner CT to be held between the right take-up reel frame 310R and the left take-up reel frame 310L. As a result, when a long-shaped cleaner CT is wound, the cleaner CT can be prevented from meandering, and the cleaner CT can thus be accurately wound around the take-up reel 3000. This can prevent cleaners CT from being entangled with each other on the take-up reel 3000, and the cleaner CT can be wound up to the end, so that waste can be avoided.

Note that the supply reel 200 has the right supply reel frame 210R and the left supply reel frame 210L in both the cleaning tool 10 and the cleaning tool 10. Hence, the cleaner CT can be supplied to the cleaning head 410 in a stable posture. This makes it possible to avoid any contact with other members, thereby capable of suppling the cleaner CT in a clean state to the cleaning head 410.

### <<<< Another Form of Cleaner CT >>>>

Next, a cleaner CT particularly suitable as a component of the optical connector cleaning tool in the invention will be described in detail. The matters already explained about the cleaner CT may be omitted here. The matters described herein are applicable to all the embodiments of the invention to the extent that there is no contradiction.

The following describes a case where the resin layer included in the cleaner CT is a polyurethane resin.

### <<< Physical Properties >>>

Hereinafter, each physical property of the cleaner CT will be described. Regarding the cleaning performance evaluation (transfer at a pin, dust removal, transfer at a fiber portion), if the cleaner includes a resin layer and a base material, the evaluation is conducted with the resin layer and the base material included. Regarding physical property evaluation (tensile strength, tear strength, elongation, elongation rate, hysteresis loss, hardness), if the cleaner includes a resin layer and a base material, the resin layer is separated from the base material and the resin layer alone (monolayer) is evaluated and measured.

### << Asker C Hardness >>

The Asker C hardness of the resin layer of the cleaner CT is preferably from 40 to 90 and more preferably from 65 to 85. If the Asker C hardness of the resin layer of the cleaner CT is within such a range, the shape of the surface to be cleaned can be followed, and contaminant scavenger performance is improved. The cleaner CT may be used for, in particular, a connection end surface that has a protruding guide pin(s) and is of an optical connector for optical fibers. In this case, the shape of the guide pin(s) can be followed. The effect of cleaning the guide pin(s) and the optical connector connection end surface can be remarkable.

The Asker C hardness of the resin layer of the cleaner CT is measured by the protocol described in JIS K7312: 1996 "Physical test protocol for thermosetting polyurethane elastomer molding". The measurement is performed using a C-type Asker rubber hardness tester. Note that in the measurement, the resin layer of a cleaner CT stored for 24 h in an environment at 25°C and 50% RH after the polyurethane resin has been cured should be used.

### << Tensile Characteristics Such as Tensile Strength >>

The tensile strength of the resin layer of the cleaner CT is preferably from 0.55 to 30 MPa, more preferably from 0.6 to 30 MPa, and particularly preferably from 0.65 to 22 MPa.

If the tensile strength of the resin layer of the cleaner CT is within such a range, the shape of the surface to be cleaned can be followed, and contaminant scavenger performance is improved. The cleaner CT may be used for, in particular, a connection end surface that has a protruding guide pin(s) and is of an optical connector for optical fibers. In this case, the shape of the guide pin(s) can be followed. The effect of cleaning the guide pin(s) and the optical connector connection end surface can be remarkable.

The breaking elongation of the resin layer of the cleaner CT is preferably from 100 to 150 mm and more preferably from 105 to 140 mm. If the breaking elongation of the resin layer of the cleaner CT is within such a range, the shape of the surface to be cleaned can be followed, and contaminant scavenger performance is improved. The cleaner CT may be used for, in particular, a connection end surface that has a protruding guide pin(s) and is of an optical connector for optical fibers. In this case, the shape of the guide pin(s) can be followed. The effect of cleaning the guide pin(s) and the optical connector connection end surface can be remarkable.

The breaking elongation rate of the resin layer of the cleaner CT is preferably from 200 to 700% and more preferably from 400 to 650%. If the breaking elongation rate of the resin layer of the cleaner CT is within such a range, the shape of the surface to be cleaned can be followed, and contaminant scavenger performance is improved. The cleaner CT may be used for, in particular, a connection end surface that has a protruding guide pin(s) and is of an optical connector for optical fibers. In this case, the shape of the guide pin(s) can be followed. The effect of cleaning the guide pin(s) and the optical connector connection end surface can be remarkable.

The tensile strength of the resin layer of the cleaner CT is measured by the measurement protocol using a dumbbell test piece as described in JIS K7312: 1996 "Vulcanized rubber and thermoplastic rubber-How to determine tensile characteristics". The dumbbell test piece should be shaped like a dumbbell No. 3 test piece. The measurement is performed using a material tester. The crosshead speed of the material tester is set to 100 mm/min. The tensile strength, breaking elongation, and breaking elongation rate may be measured at the same time.

### << Tear Strength >>

The tear strength of the resin layer of the cleaner CT is preferably from 3 N to 30 N and more preferably from 5 N to 16 N. If the tear strength of the resin layer of the cleaner CT is within such a range, the shape of the surface to be cleaned can be followed, and contaminant scavenger performance is improved. The cleaner CT may be used for, in particular, a connection end surface that has a protruding guide pin(s) and is of an optical connector for optical fibers. In this case, the shape of the guide pin(s) can be followed. The effect of cleaning the guide pin(s) and the optical connector connection end surface can be remarkable.

The tear strength of the resin layer of the cleaner CT is measured by the measurement protocol using an angle test piece as described in JIS K7312: 1996 "Vulcanized rubber and thermoplastic rubber-How to determine tear strength". The measurement is performed using a material tester. The crosshead speed of the material tester is set to 100 mm/min.

### << Hysteresis Loss >>

The hysteresis loss of the resin layer of the cleaner CT is preferably from 3 to 60% or less and more preferably from 5 to 50%. If the hysteresis loss of the resin layer of the cleaner CT is within such a range, the shape of the surface to be cleaned can be followed, and contaminant scavenger performance is improved. The cleaner CT may be used for, in particular, a connection end surface that has a protruding guide pin(s) and is of an optical connector for optical fibers. In this case, the shape of the guide pin(s) can be followed. The effect of cleaning the guide pin(s) and the optical connector connection end surface can be remarkable.

The hysteresis loss of the cleaner CT is measured by the protocol described in JIS K7312: 1996 "Physical test protocol for thermosetting polyurethane elastomer molding". The measurement is performed by a tensile hysteresis test using a material tester. A test piece should be shaped like a dumbbell No. 3 test piece. The crosshead speed of the material tester is set to 1000 mm/min, and the hysteresis loss after 30 cycles of tension and compression is measured.

If the resin layer of the cleaner CT has such characteristics, the cleaner CT can follow the shape of the surface to be cleaned. The cleaner CT may be used for, in particular, a connection end surface that has a protruding guide pin(s) and is of an optical connector for optical fibers. In this case, the shape of the guide pin(s) can be followed. The effect of cleaning the guide pin(s) and the optical connector connection end surface can be remarkably high. Further, contaminants once captured on the cleaner CT do not reattach to the surface to be cleaned again. This can remarkably improve the cleaning effect.

### <<< Material for Resin Layer >>>

### << Polyurethane Resin >>

The polyurethane resin is made from a polyurethane resin composition including a polyol and a polyisocyanate, and the composition optionally includes another component(s).

### <Polyol>

The number of hydroxyl groups (hereinafter, may be referred to as the number of functional groups) contained in the structure of one molecule of the polyol is preferably from 2 to 5 and more preferably from 2 to 3. If the number of hydroxyl groups of the polyol is within such a range, an easy-to-elongate, hard-to-break polyurethane resin product with high shape followability can be obtained. Multiple kinds of polyols may be included as the polyol. In this case, the ratio of each polyol is multiplied by the number of hydroxyl groups of the polyol to give a value. The resulting values are summed up to calculate the number of hydroxyl groups of the polyol.

The number-average molecular weight of the polyol is preferably from 100 to 6000. If the number-average molecular weight of the polyol is within such a range, an easy-to-elongate, hard-to-break polyurethane resin product with high shape followability can be obtained.

Specific examples of the polyol include, but are not particularly limited to, polyester polyol, polycarbonate polyol, polyether polyol, polyester ether polyol, polydiene-based polyol, hydrogenated polydiene polyol, or polymer polyol thereof. The polyols may be used singly or two or more kinds thereof may be used.

Examples of the polyester polyol include a polyester polyol obtained by dehydration condensation of a polyol and a polycarboxylic acid or a polyester polyol obtained by ring-opening polymerization of a lactone monomer such as ε-caprolactone or methylvalerolactone.

The polyester polyol-forming polyol is not particularly limited. Examples of the polyol include an aliphatic polyol (e.g., ethylene glycol, 1,3-propylene glycol, 1,2-propylene glycol, 1,3-butanediol, 1,4-butanediol, 1,5-pentanediol, and 1,6-hexanediol, 3-methyl-1,5-pentanediol, neopentyl glycol, 1,8-octanediol, 1,9-nonanediol, 1,4-tetracosandiol, 1,6-tetracosandiol, 1,4-hexacosandiol, 1,6-octacosanediol glycerin, trimethylolpropane, trimethylolethane, hexanetriol, pentaerythritol, sorbitol, mannitol, sorbitan, diglycerin, dipentaerythritol);an alicyclic polyol (e.g., 1,2-cyclohexanediol, 1,4-cyclohexanediol, cyclohexanedimethanol, tricyclodecanedimethanol, cyclopentadienedimethanol, 2,5-norbornanediol, 1,3-adamantandiol, dimerdiol); or an aromatic polyol (e.g., bisphenol A, bisphenol F, phenol novolac, cresol novolac). They may be used singly or a plurality of them may be used in combination.

The polyester polyol-forming polycarboxylic acid is not particularly limited as long as the molecular structure includes a plurality of carboxyl groups. Examples of the polycarboxylic acid include an aliphatic polycarboxylic acid (e.g., succinic acid, adipic acid, sebacic acid, azelaic acid); an aromatic polycarboxylic acid (e.g., phthalic acid, terephthalic acid, isophthalic acid, naphthalenedicarboxylic acid);an alicyclic polycarboxylic acid (e.g., hexahydrophthalic acid, hexahydroterephthalic acid, hexahydroisophthalic acid); or an acid ester thereof. They may be used singly or a plurality of them may be used in combination.

Examples of the polycarbonate polyol include a product obtained by reacting a polyhydric alcohol (e.g., ethylene glycol, 1,2-propylene glycol, 1,3-propylene glycol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, diethylene glycol) with, for instance, diethylene carbonate, dimethyl carbonate, or diethyl carbonate.

Examples of the polyether polyol include polyethylene glycol, polypropylene glycol, polytetramethylene ether glycol or the like produced by polymerizing a cyclic ether (e.g., ethylene oxide, propylene oxide, tetrahydrofuran) or a copolyether thereof. In addition, a polyhydric alcohol (e.g., glycerin, trimethylolethane) may be used and the above cyclic ether may be polymerized for the production.

Examples of the polyester ether polyol include those obtained by dehydration condensation of a polycarboxylic acid and a glycol (e.g., diethylene glycol or a propylene oxide adduct).

Examples of the polyester ether polyol-forming polycarboxylic acid include an aliphatic polycarboxylic acid (e.g., succinic acid, adipic acid, sebacic acid, azelaic acid); an aromatic polycarboxylic acid (e.g., phthalic acid, terephthalic acid, isophthalic acid, naphthalenedicarboxylic acid);an alicyclic polycarboxylic acid (e.g., hexahydrophthalic acid, hexahydroterephthalic acid, hexahydroisophthalic acid); or an acid ester thereof. They may be used singly or a plurality of them may be used in combination.

The polymer polyol is obtained by polymerizing an ethylenically unsaturated monomer in the polyol.

Examples of the ethylenically unsaturated monomer include an acrylic monomer such as an alkyl (meth)acrylate (e.g., (meth)acrylonitrile, methyl methacrylate) (the alkyl moiety may be C₁₋₂₀ or more);a hydrocarbon-based monomer such as an aromatic unsaturated hydrocarbon (e.g., styrene) or an aliphatic unsaturated hydrocarbon (e.g., α-olefin, butadiene) (e.g., a C₂₋₂₀ or more alkene or alkadiene);or use in combination with two or more of them [e.g., use in combination of acrylonitrile/styrene (weight ratio: from 100/0 to 80/20)].

Among these polyols, it is preferable to include a polyether polyol, a polyester polyol, or a polymer polyol as the polyol, and it is more preferable to include two or more of them as the polyol. If these polyols are used, an easy-to-elongate, hard-to-break polyurethane resin product with high shape followability can be obtained.

### <Polyisocyanate>

The specific polyisocyanate is not particularly limited, and may be a bifunctional polyisocyanate or a trifunctional or higher functional polyisocyanate.

Examples of the bifunctional polyisocyanate include
an aromatic one (e.g., 2,4-toluene diisocyanate (2,4-TDI), 2,6-toluene diisocyanate (2,6-TDI), m-phenylene diisocyanate, p-phenylene diisocyanate, 4,4'-diphenylmethane diisocyanate (4, 4'-MDI), 2,4'-diphenylmethane diisocyanate (2,4'-MDI), 2,2'-diphenylmethane diisocyanate (2,2'-MDI), hydrogenated MDI, monomeric diphenylmethane diisocyanate (monomeric MDI), xylylene diisocyanate, 3,3'-dimethyl-4,4'-biphenylenedisonate, 3,3'-dimethoxy-4,4'-biphenylenediocyanate, polymethylene polyphenyl polyisocyanate, 1,5-naphthalene diisocyanate, xylylene diisocyanate (XDI), hydrogenated XDI, tetramethylxylene diisocyanate (TMXDI));
an alicyclic one (e.g., cyclohexane-1,4-diisocyanate, isophorone diisocyanate, dicyclohexylmethane-4,4'-diisocyanate, methylcyclohexanediisocyanate); or
an alkylene-based one (e.g., butane-1,4-diisocyanate, hexamethylene diisocyanate, isopropylene diisocyanate, methylene diisocyanate, lysine diisocyanate).

Examples of the trifunctional or higher functional polyisocyanate include
1-methylbenzol-2,4,6-triisocyanate, 1,3,5-trimethylbenzol-2,4,6-triisocyanate, biphenyl-2,4,4'-triisocyanate, diphenylmethane-2,4, 4'-triisocyanate, methyldiphenylmethane-4,6,4'-triisocyanate, 4,4'-dimethyldiphenylmethane-2,2',5,5'-tetraisocyanate, triphenylmethane-4,4',4"-triisocyanate, polymeric MDI, lysine ester triisocyanate, 1,3,6-hexamethylene triisocyanate, 1,6,11-undecantriisocyanate, bicycloheptane triisocyanate, or 1,8-diisocyanatomethyloctane.

The polyisocyanate may be a modified polyisocyanate or a derivative of each polyisocyanate. Further, the isocyanates may be used singly or a plurality of them may be used in combination.

The polyisocyanate preferably includes an aromatic one and/or an aliphatic one, and more preferably includes an aromatic one. The polyisocyanate particularly preferably includes 4,4'-diphenylmethane diisocyanate (4,4'-MDI), 2,4'-diphenylmethane diisocyanate (2,4'-MDI), 2,2'-diphenylmethane diisocyanate (2,2'-MDI), hydrogenated MDI, monomeric diphenylmethane diisocyanate (monomeric MDI), or hexamethylene diisocyanate.

The NCO% of the polyisocyanate is preferably from 10 to 70, more preferably from 20 to 60, and particularly preferably from 30 to 55.

If the NCO% of the polyisocyanate is within such a range, an easy-to-elongate, hard-to-break polyurethane resin product with high shape followability can be obtained.

A polyurethane resin composition containing such a component(s) can be molded into a sheet or the like and then cured by, for instance, light or heat to produce a resin layer.

### <<<< Another Form of Cleaning Tool 10 >>>>

Next, particularly suitable component members of the optical connector cleaning tool in the invention will be described in detail. The matters described herein are applicable to all the embodiments of the invention to the extent that there is no contradiction.

Members that can come into contact with the cleaner CT (e.g., the head section 400, the cleaning head 410, the head holder 420) preferably contain a filler. Some members may contain a filler, or all the members may contain a filler. In addition, each member may be formed such that only part of their region contains the filler or the entire member contains the filler.

The member that can come into contact with the cleaner CT may contain a filler. In this case, a site where the member can come into contact with the cleaner CT (a surface that can be in contact with the cleaner CT) has roughness because the filler is exposed and has roughness provided along the filler embedded in a thick portion of the member. This roughness can prevent the member from being tightly attached to the cleaner CT, and as a result of which, the cleaner CT can be smoothly delivered.

Note that the method of incorporating such a filler in each member is not particularly limited, and examples include (1) a method of kneading the filler in advance when manufacturing the member, (2) a method of embedding the filler into a member surface under a state in which the viscosity of the member surface is lowered by heat, a solvent, or the like, or (3) a method of applying an adhesive or a resin material containing the filler onto a member surface.

The material of the filler is not particularly limited, and a resin filler or an inorganic filler may be used. The material used for member molding is likely to be negatively charged. In the case of introducing a filler that is likely to be relatively positively charged, a static charge of the member can be blocked, the member can be prevented from being tightly attached to the cleaner CT, and the cleaner CT can thus be smoothly delivered. From such a viewpoint, the filler is preferably a POM filler, a PP filler, a PET filler, an acrylic resin filler, or a glass filler, and more preferably a glass filler. One kind of the filler may be used singly, or two or more kinds thereof may be used.

The particle size of such a filler is not particularly limited, and may be, for instance, from 0.1 to 1000 µm and preferably from 1 to 100 µm.

In addition, as for the member that can come into contact with the cleaner CT, the portion that can come into contact with the cleaner CT may be roughened, or roughness may be provided by the component member itself. As a result, the member can be prevented from being tightly attached to the cleaner CT, so that the cleaner CT can be smoothly delivered.

As mentioned above, the invention has been described in accordance with embodiments, but the descriptions and drawings that form part of this disclosure should not be understood to limit the invention. It is evident that the invention includes, for instance, various embodiments not described herein.

In particular, the given cleaning tools described using the embodiments include any of a form in which the used cleaner CT is replaceable or a form in which the used cleaner CT is unreplaceable (a disposable form). In the form in which the used cleaner CT is replaceable, a conventionally known procedure can be adopted as a procedure for replacing the cleaner CT. For instance, the used cleaner CT may be replaced for each supply reel and/or take-up reel.

Further, from such a viewpoint, the invention can be understood as a given cleaner CT suitable for use in a given optical connector cleaning tool with a prescribed mechanism. In particular, the cleaner CT may be replaceable in the given optical connector cleaning tool with a prescribed mechanism. In this case, it can be understood that the replacement cleaner CT is also included in the invention.

Further, from another viewpoint, it is also possible to make the invention a given optical connector cleaning tool suitable for using a given cleaner CT.

### Examples

Next, specific examples of the cleaner CT preferably used as a constituent material of the cleaning tool 10 according to the invention will be described in detail with reference to Examples and Reference Examples. However, the invention is not limited to these Examples.

### <<<< Production of Cleaner CT >>>>

Cleaners CT according to Examples 1 to 8 and Reference Examples 1 to 3 were obtained as follows.

### <<< Example 1 >>>

First, 10 mass% ester-based diol having a number-average molecular weight of 1500, 80 mass% ether-based diol having a number-average molecular weight of 2000, and 10 mass% ether-based triol having a number-average molecular weight of 1500 were mixed to prepare a mixture as a main agent.

A monomeric diphenylmethane diisocyanate carbodiimide-modified isocyanate, an ether-based triol having a number-average molecular weight of 3000, and an ester-based diol having a number-average molecular weight of 500 were mixed and reacted at 80°C for 2 h to produce a prepolymer having an NCO of about 18.9% as a curing agent.

The resulting curing agent was transferred to a container. Next, the main agent was weighed such that the isocyanate group of the polyisocyanate in the curing agent and the hydroxyl group of the polyol in the main agent had an equivalent ratio of 1.2 (isocyanate group equivalent / hydroxyl group equivalent). Then, this main agent was added dropwise to the curing agent while stirring.

After the dropping was completed, a catalyst (0.3 g of dibutyltin dilaurate) was added. Subsequently, the mixture was thoroughly mixed and then defoamed under vacuum to prepare a mixed solution of Example 1.

### << Cleaner CT for Evaluation of Cleaning Performance >>

Next, a cleaner CT for evaluation of cleaning performance was produced as follows.

The resulting mixed solution was poured onto a non-release surface of a 25 µm-thick PET film (Toray Advanced Film Co., Ltd; "Serapeel" BKE-RX) that had undergone release treatment, and an applicator (a film applicator No. 350FA; Coating Tester Industry) was used to prepare a film-shaped material having a thickness of 350 µm.

The film-shaped material was heated in a drying oven at 100°C for 60 min to cause an urethanization reaction, and curing was completed.

As described above, a cleaner CT, which was a sheet-shaped material having a thickness of 350 µm, was obtained. Note that the PET film was used as it was as a base material for the cleaner CT.

### << Cleaner CT for Evaluating Physical Properties of Resin Layer (Sample for Evaluating Physical Properties) >>

In addition, each cleaner CT (sample for evaluating physical properties) for evaluating physical properties of the resin layer was produced as follows.

The resulting mixed solution was poured onto a release surface of a 25 µm-thick PET film (Toray Advanced Film Co., Ltd; "Serapeel" BKE-RX) that had undergone release treatment, and an applicator (a film applicator No. 350FA; Coating Tester Industry) was used to prepare a film-shaped material having a thickness of 350 µm .

The film-shaped material was heated in a drying oven at 100°C for 60 min to cause an urethanization reaction, and curing was completed.

### <<< Examples 2 to 8 and Reference Examples 1 to 3 >>>

Under various conditions designated in Tables 1 and 2, cleaners CT and resin layers of the cleaners CT according to Examples 2 to 8 and Reference Examples 1 to 3 were obtained in substantially the same manner as in Example 1.

The combination of the main agent and the curing agent used in each of the Examples or the Reference Examples are as follows.

**[Table 1]**

| | | |
|---|---|---|
| Example 1 | Main agent | Mixture obtained by mixing a mixture of 10 mass% ester-based diol having a molecular weight of about 1500 and 80 mass% ether-based diol having a molecular weight of 2000 with 10 mass% ether-based triol having a molecular weight of about 1500 |
| | Curing agent | Prepolymer having about 12 mass% NCO as obtained by reacting, at 80°C for 2h, hexamethylene diisocyanate, a mixture of ester-based or ether-based triol having a molecular weight of from 500 to 6000, and a mixture of ester-based or ether-based diol having a molecularweight of from 100 to 6000 |
| Example 2 | Main agent | Mixture obtained by mixing a mixture of 10 mass% ester-based diol and 70 mass% ether-based diol having a molecular weight of from about 800 to 2000 with 20 mass% ether-based triol having a molecular weight of from about 1000 to 2000 |
| | Curing agent | Prepolymer having about 18.9 mass% NCO as obtained by reacting, at 80°C for 2h, monomeric diphenylmethane diisocyanate carbodiimide-modified isocyanate, a mixture of ester-based or ether-based triol having a molecular weight of from 3000 to 6000, and a mixture of ester-based or ether-based diol having a molecular weight of from 500 to 3000 |
| Example 3 | Main agent | Mixture obtained by mixing a mixture of 10 mass% ester-based diol having a molecular weight of about 1500 and 80 mass% ether-based diol having a molecularweight of 3000 with 10 mass% ether-based triol having a molecularweight of about 1500 |
| | Curing agent | Prepolymer having about 18.9 mass% NCO as obtained by reacting, at 80°C for 2 h, monomeric diphenylmethane diisocyanate carbodiimide-modified isocyanate, a mixture of ester-based or ether-based triol having a molecular weight of from 3000 to 6000, and a mixture of ester-based or ether-based diol having a molecular weight of from 500 to 3000 |
| Example 4 | Main agent | Mixture obtained by mixing a mixture of 10 mass% ester-based diol having a molecular weight of about 1500 and 80 mass% ether-based diol having a molecularweight of 3000 with 10 mass% ether-based triol having a molecularweight of about 1500 |
| | Curing agent | Prepolymer having about 30 mass% NCO as obtained by reacting, at 80°C for 2h, monomeric diphenylmethane diisocyanate carbodiimide-modified isocyanate, a mixture of ester-based or ether-based triol having a molecular weight of from 3000 to 6000, and a mixture of ester-based or ether-based diol having a molecular weight of from 500 to 3000 |
| Example 5 | Main agent | Mixture obtained by mixing a mixture of 10 mass% ester-based diol having a molecular weight of about 1500 and 80 mass% ether-based diol having a molecularweight of 2000 with 10 mass% ether-based triol having a molecularweight of about 1500 |
| | Curing agent | Prepolymer having about 18.9 mass% NCO as obtained by reacting, at 80°C for 2 h, monomeric diphenylmethane diisocyanate carbodiimide-modified isocyanate, a mixture of ester-based or ether-based triol having a molecular weight of from 3000 to 6000, and a mixture of ester-based or ether-based diol having a molecular weight of from 500 to 3000 |
| Example 6 | Main agent | Mixture obtained by mixing a mixture of 10 mass% ester-based diol and 70 mass% ether-based diol having a molecular weight of from about 800 to 2000 with 20 mass% ether-based triol having a molecular weight of from about 1000 to 2000 |
| | Curing agent | Prepolymer having about 12 mass% NCO as obtained by reacting, at 80°C for 2 h, hexamethylene diisocyanate, a mixture of ester-based or ether-based triol having a molecular weight of from 500 to 6000, and a mixture of ester-based or ether-based diol having a molecularweight of from 100 to 6000 |
| Example 7 | Main agent | Mixture obtained by mixing a mixture of 10 mass% ester-based diol and 80 mass% ether-based diol having a molecular weight of from 200 to 800 with 5 mass% ester-based triol and 5 mass% ether-based triol having a molecularweight of from 200 to 800 |
| | Curing agent | Prepolymer having about 18.9 mass% NCO as obtained by reacting, at 80°C for 2 h, monomeric diphenylmethane diisocyanate carbodiimide-modified isocyanate, a mixture of ester-based or ether-based triol having a molecular weight of from 3000 to 6000, and a mixture of ester-based or ether-based diol having a molecular weight of from 500 to 3000 |
| Example 8 | Main agent | Mixture obtained by mixing a mixture of 10 mass% ester-based diol and 70 mass% ether-based diol having a molecular weight of from 200 to 800 with 15 mass% ester-based triol and 5 mass% ether-based triol having a molecular weight of from 200 to 800 |
| | Curing agent | Prepolymer having about 18.9 mass% NCO as obtained by reacting, at 80°C for 2 h, monomeric diphenylmethane diisocyanate carbodiimide-modified isocyanate, a mixture of ester-based or ether-based triol having a molecular weight of from 3000 to 6000, and a mixture of ester-based or ether-based diol having a molecular weight of from 500 to 3000 |
| Reference Example 1 | Main agent | Mixture obtained by mixing a mixture of about 40 mass% ether-based diol and about 10 mass% triol having a molecular weight of about 6000 with about 40 mass% ether-based diol polymer polyol and about 10 mass% triol polymer polyol having a molecular weight of about 6000 |
| | Curing agent | Prepolymer having about 12 mass% NCO as obtained by reacting, at 80°C for 2 h, hexamethylene diisocyanate, a mixture of ester-based or ether-based triol having a molecular weight of from 500 to 6000, and a mixture of ester-based or ether-based diol having a molecularweight of from 100 to 6000 |
| Reference Example 2 | Main agent | Mixture obtained by mixing a mixture of about 45 mass% ether-based diol and about 5 mass% ester-based triol having a molecular weight of about 2000 with about 45 mass% ether-based diol and about 5 mass% ester-based triol having a molecular weight of about 3000 |
| | Curing agent | Prepolymer having about 8.8 mass% NCO as obtained by reacting, at 80°C for 2 h, monomeric diphenylmethane diisocyanate, a mixture of ester-based or ether-based triol having a molecular weight of from 3000 to 5000, and a mixture of ester-based or ether-based diol having a molecular weight of from 200 to 3000 |
| Reference Example 3 | Main agent | Mixture obtained by mixing a mixture of about 40 mass% ether-based diol and about 10 mass% triol having a molecular weight of about 6000 with about 40 mass% ether-based diol polymer polyol and about 10 mass% triol polymer polyol having a molecular weight of about 6000 |
| | Curing agent | Prepolymer having about 8.8 mass% NCO as obtained by reacting, at 80°C for 2 h, monomeric diphenylmethane diisocyanate, a mixture of ester-based or ether-based triol having a molecular weight of from 3000 to 5000, and a mixture of ester-based or ether-based diol having a molecular weight of from 200 to 3000 |

### <<<< Evaluation >>>>

The following evaluation tests were carried out on the resulting cleaner CT of each of the Examples or the Reference Examples. Table 2 shows the results of each evaluation.

### <<< Evaluation of Physical Properties of Resin Layer >>>

### << Asker C Hardness >>

Asker C hardness was measured according to the protocol described in JIS K7312: 1996 "Physical test protocol for thermosetting polyurethane elastomer molding".

### (Preparation of Test Piece)

Each mixed solution was placed in an aluminum cup container, adjusted so as to yield a resin layer with a thickness of 10 mm, cured at 100°C for 60 min, and then stored for 24 h in an environment at 25°C and 50% RH to prepare a measurement sample.

### (Measurement Condition)

The measurement was performed using a C-type Asker rubber hardness tester manufactured by KOBUNSHI KEIKI CO., LTD.

### << Tensile Characteristics Such as Tensile Strength >>

### <Tensile Strength, Breaking Elongation, and Breaking Elongation Rate>

The tensile strength, breaking elongation, and breaking elongation rate were measured according to the measurement protocol using a dumbbell test piece described in JIS K7312: 1996 "Physical test protocol for thermosetting polyurethane elastomer molding".

### (Preparation of Test Piece)

The resin layer of each cleaner CT (sheet with a thickness of 350 µm) was molded into a dumbbell No. 3 test piece shape to prepare a dumbbell test piece.

### (Measurement Condition)

The measurement was carried out by peeling and separating the resin layer from the base material, and the resulting resin monolayer was measured using a material tester AGS-X (load cell: 5 kN) manufactured by Shimadzu Corporation.

The crosshead speed of the material tester was set to 100 mm/min, and the tensile strength, breaking elongation and breaking elongation rate were measured from the load when the sample broke and the displacement of the crosshead.

### <Tear Strength>

The tear strength was measured according to the measurement protocol using an angle test piece described in JIS K7312: 1996 "Physical test protocol for thermosetting polyurethane elastomer molding".

### (Preparation of Test Piece)

The resin layer of each cleaner CT (sheet with a thickness of 350 µm) was molded into an angle test piece shape to prepare an angle test piece.

### (Measurement Condition)

The measurement was carried out by peeling and separating the resin layer from the base material, and the resulting resin monolayer was measured using a material tester AGS-X (load cell: 5 kN) manufactured by Shimadzu Corporation.

The crosshead speed of the material tester was set to 100 mm/min for the measurement.

### << Hysteresis Loss >>

The hysteresis loss was measured according to the measurement protocol using a dumbbell test piece described in JIS K7312: 1996 "Physical test protocol for thermosetting polyurethane elastomer molding".

### (Preparation of Test Piece)

The resin layer of each cleaner CT (sheet with a thickness of 350 µm) was molded into a dumbbell No. 3 test piece shape to prepare a dumbbell test piece.

### (Measurement Condition)

The measurement was carried out by peeling and separating the resin layer from the base material, and the resulting resin monolayer was measured using a material tester AGS-X (load cell: 5 kN) manufactured by Shimadzu Corporation.

The crosshead speed of the material tester was set to 1000 mm/min, and the hysteresis loss after 30 cycles of tension and compression was determined. Here, the displacement and load of the crosshead were measured, and the load and displacement curve after the cycle test was used for the determination.

### <<< Cleaning Performance Evaluation >>>

### << Evaluation of Transfer Performance at Pin and Dust Removal Performance>>

The transfer performance at a pin and the dust removal performance were evaluated by the following procedures.

Male and female MPO jumper cords, manufactured by Senko Sangyo Co., Ltd., that had a 12MPO on both ends, were OM3 cord type, had a total length of 1 m, and were subjected to flat polishing or APC 8-degree polishing were used and paper powder and/or AC dust FINE were attached in advance to the connection surface to prepare a connector for evaluation.

After the connection end surface of the connector was brought into contact with the surface of each cleaner CT, the guide pin and the surface of the connection end surface of the connector were inspected to check the presence or absence of contamination at the pin during dust transfer and dust removal performance at the connection end surface of the connector.

A KEYENCE microscope (model VHX-500F) at an arbitrary magnification was used for the inspection. The measurement was also performed using a Manta+ manufactured by Sumix Inc.

The transfer performance at a pin and the dust removal performance were judged as follows.
⊚: Dust on the guide pin and the connector connection end surface was completely removed.
○: Some dust remained on the connection end surface, but dust on the fibers was removed and there was no problem with the connection itself.
×: The dust was not completely removed.

### << Evaluation of Transfer Performance at Optical Fiber Portion >>

Transfer performance at a fiber portion of the resulting contaminant scavenger of each of the Examples or the Reference Examples evaluated by the procedure below.

Male and female MPO jumper cords, manufactured by Senko Sangyo Co., Ltd., that had a 12MPO on both ends, were OM3 cord type, had a total length of 1 m, and were subjected to flat polishing or APC 8-degree polishing were used and paper powder and/or AC dust FINE were attached in advance to the connection surface to prepare a connector for evaluation.

The connection end surface (including an optical fiber portion) of the connector was first brought into contact with the surface of each contaminant scavenger. Then, the surface of the optical fiber portion at the connection end surface of the connector was inspected to check the presence or absence of any contaminant or transferred material.

For the inspection, optical fibers of the connector were observed using a Manta+ manufactured by Sumix Inc.

The transfer performance at the optical fiber portion was judged as follows.
⊚: Dust on the optical fiber portion was completely removed.
○: Some dust remained on the connection end surface, but dust on the fibers was removed and there was no problem with the connection itself.
×: The dust was not completely removed.

**[Table 2]**

| No | | Example 1 | Example 2 | Example 3 | Example 4 | Example 5 | Example 6 | Example 7 | Example 8 | Reference Example 1 | Reference example 2 | Reference Example3 |
|---|---|---|---|---|---|---|---|---|---|---|---|---|
| Main agent (parts by mass) | | 102 | 100 | 100 | 100 | 102 | 102 | 102 | 102 | 102 | 102 | 102 |
| Curing agent (parts by mass) | | 25 | 100 | 30 | 30 | 25 | 25 | 25 | 25 | 25 | 25 | 25 |
| Curing temperature | | 100°C | 100°C | 100°C | 100°C | 100°C | 100°C | 100°C | 100°C | 100°C | 100°C | 100°C |
| Coating thickness | | 350µm | 350µm | 350µm | 350µm | 350µm | 350µm | 350µm | 350µm | 350µm | 350µm | 350µm |
| Cleaning performance evaluation | Base material coating surface | Non-release surface | ← | ← | ← | ← | ← | ← | ← | ← | ← | ← |
| | Transfer at a pin | ⊚ | ⊚ | ⊚ | ⊚ | ⊚ | ⊚ | ⊚ | ○ | × | × | ○ |
| | Dust removal | ○ | ⊚ | ⊚ | ⊚ | ⊚ | ⊚ | ⊚ | ○ | ○ | ○ | × |
| | Transfer at a fiber | ⊚ | ○ | ⊚ | ⊚ | ⊚ | ⊚ | ⊚ | ⊚ | ○ | ○ | ○ |
| | Judgement | ○ | ○ | ⊚ | ⊚ | ⊚ | ⊚ | ⊚ | ○ | × | × | × |
| Physical property evaluation | Base material coating surface | Release surface | ← | ← | ← | ← | ← | ← | ← | ← | ← | ← |
| | Tensile strength (MPa) | 0.6 | 2.34 | 0.65 | 3.96 | 7.0 | 22.0 | 20.7 | 30.0 | 0.5 | 1.6 | 35 |
| | Tear strength (N) | 5.2 | 4.03 | 6.51 | 9.27 | 5.9 | 15.6 | 13.0 | 18.8 | 1.2 | 12.8 | 22.1 |
| | 3reaking elongation (mm) | 139.0 | 130 | 86.67 | 210.00 | 135.0 | 111.7 | 105.0 | 102.0 | 45.0 | 373.3 | 94 |
| | Breaking elongation rate (%) | 648.0 | 4.03 | 6.51 | 9.27 | 637.5 | 458.3 | 425.0 | 412.0 | 125.0 | 1766.7 | 195 |
| | Hysteresis loss | 26.0 | 33.0 | 31.3 | 28.2 | 5.3 | 49.9 | 49.4 | 52.4 | 2.0 | 22.3 | 53.5 |
| | Hardness (Asker C) | 40 | 40 | 65 | 68 | 67 | 85 | 85 | 90 | 35 | 38 | 95 |

In addition, the cleaner CT of each Example was actually assembled into the cleaning tool 10 and used. Then, the cleaner CT was found to be able to easily scavenge a contaminant(s) from the end surface of the optical connector without hindering the movement of the cleaning tool.

### Reference Signs List

- 10: Cleaning tool
- 100: Housing
- 140: Coil spring
- 200: Supply reel
- 300: Take-up reel
- 410: Cleaning head
- 420: Head holder
- 500: Take-up controller
- CT: Cleaner
- RL: Resin layer
- MF: Maximum front position
- MR: Maximum rear position

## Claims

1. An optical connector cleaning tool, comprising:
a main body housing a supply holder configured to hold a cleaner that has a contaminant-retainable layer and can be supplied so as to clean an end surface of an optical connector;
a cleaning head configured to position the cleaner having been supplied from the main body and be held at a certain holding position with respect to the main body;
a controller that can be engaged with the optical connector and can be displaced from a first position to a second position, which is different from the first position, with respect to the cleaning head while kept engaged with the optical connector; and
a supply mechanism configured to transmit, to the cleaner, movement of displacing the controller from the first position to the second position to displace and then supply the cleaner to the cleaning head,
wherein when the controller is positioned at the first position, the cleaning head is apart from the end surface of the optical connector,
while the controller is displaced from the first position to the second position, the supply mechanism causes the cleaner to be displaced, and
when the controller is positioned at the second position, the cleaning head comes into contact with the end surface of the optical connector.

2. The optical connector cleaning tool according to claim 1, further comprising:
a head holder provided at a fixed position with respect to the main body and having a certain shape,
wherein the cleaning head is provided at a fixed position of the head holder and is held at the holding position with respect to the main body.

3. The optical connector cleaning tool according to claim 2, wherein the head holder guides the cleaner, which is supplied from the main body, along a straight line toward the cleaning head.

4. The optical connector cleaning tool according to claim 3, further comprising:
a recovery holder for recovering and holding the cleaner having been supplied to the cleaning head,
wherein the supply mechanism transmits the movement of the controller to the recovery holder to recover the cleaner in the recovery holder, pulls the cleaner during the recovery of the cleaner, and thus supply a cleaner from the main body to the cleaning head.

5. The optical connector cleaning tool according to claim 1, further comprising:
an urging force generating means for applying, to the controller, an urging force for returning the controller to the first position,
the urging force generating means being arranged at a position adjacent to the supply holder and away from a transfer path of the cleaner.

6. The optical connector cleaning tool according to claim 3, wherein the head holder has at least one through-hole on a surface facing the cleaner.

7. The optical connector cleaning tool according to claim 3, wherein the head holder comprises a filler.

8. The optical connector cleaning tool according to claim 4, wherein the recovery holder is a rotary holder in which the cleaner is taken up and recovered, and has two reel frames having a gap and facing each other, the two reel frames holding the cleaner taken up in the gap.

9. The optical connector cleaning tool according to claim 1,
wherein the cleaner has a resin layer comprising a polyurethane resin, and
the resin layer has a tensile strength of from 0.6 to 30 MPa, an Asker C hardness of from 40 to 90, and a hysteresis loss of from 5 to 53.
